(19) Europäisches Patentamt / European Patent Office / Office européen des brevets

(11) EP 3 904 594 B1

(12) # EUROPEAN PATENT SPECIFICATION

(45) Date of publication and mention of the grant of the patent:
**14.01.2026 Bulletin 2026/03**

(21) Application number: **19902310.2**

(22) Date of filing: **25.12.2019**

(51) International Patent Classification (IPC):
***D21H 11/20*** *(2006.01)* ***C08B 5/00*** *(2006.01)*
***C08L 1/16*** *(2006.01)* ***D21C 9/00*** *(2006.01)*

(52) Cooperative Patent Classification (CPC):
**D21C 9/002; C08B 5/00; C08L 1/16; D21C 9/005; D21H 11/20**

(86) International application number:
**PCT/JP2019/050805**

(87) International publication number:
**WO 2020/138158 (02.07.2020 Gazette 2020/27)**

(54) **CELLULOSE FIBERS, CELLULOSE FIBER-CONTAINING MATERIAL, MOLDED BODY, AND METHOD FOR PRODUCING CELLULOSE FIBERS**

CELLULOSEFASERN, CELLULOSEFASER-ENTHALTENDES MATERIAL, GEFORMTER KÖRPER UND VERFAHREN ZUR HERSTELLUNG VON CELLULOSEFASERN

FIBRES DE CELLULOSE, MATÉRIAU CONTENANT DES FIBRES DE CELLULOSE, CORPS MOULÉ ET PROCÉDÉ DE PRODUCTION DE FIBRES DE CELLULOSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2018 JP 2018248487**

(43) Date of publication of application:
**03.11.2021 Bulletin 2021/44**

(73) Proprietor: **Oji Holdings Corporation**
**Chuo-ku**
**Tokyo 104-0061 (JP)**

(72) Inventor: **WATANABE Tomoki**
**Tokyo 104-0061 (JP)**

(74) Representative: **Godemeyer Blum Lenze Patentanwälte**
**Partnerschaft mbB - werkpatent**
**An den Gärten 7**
**51491 Overath (DE)**

(56) References cited:
**WO-A1-2014/185505 WO-A1-2017/170908**
**WO-A1-2018/159473 WO-A1-2018/159743**
**WO-A1-2018/198162 JP-A- 2018 199 891**

- **INAGAKI NORIHIRO ET AL: "PHOSPHORYLATION OF CELLULOSE WITH PHOSPHOROUS ACID AND THERMAL DEGRADATION OF THE PRODUCT", JOURNAL OF APPLIED POLYMER SCIENCE, JOHN WILEY & SONS, INC, US, vol. 20, no. 10, 1 October 1976 (1976-10-01), pages 2829 - 2836, XP002505464, ISSN: 0021-8995, DOI: 10.1002/APP.1976.070201017**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 904 594 B1

## Description

Technical Field

The present invention relates to a method for producing cellulose fibers, cellulose fibers, a cellulose fiber-containing material, and a molded body.

Background Art

Conventionally, cellulose fibers have been broadly utilized in clothes, absorbent articles, paper products, and the like. As cellulose fibers, ultrafine cellulose fibers having a fiber diameter of 1 μm or less have been known, as well as cellulose fibers having a fiber diameter of 10 μm or more and 50 μm or less. Such ultrafine cellulose fibers have attracted attention as novel materials, and the intended use thereof has been highly diversified. For example, the development of sheets, resin composites and thickeners, comprising the ultrafine cellulose fibers, has been promoted.

Ultrafine cellulose fibers can be produced by mechanically treating conventional cellulose fibers. Cellulose fibers strongly bind to one another by hydrogen bonds. Accordingly, only by simply performing a mechanical treatment, enormous energy is required to obtain ultrafine cellulose fibers. It has been known that, in order to produce ultrafine cellulose fibers by smaller mechanical treatment energy, it is effective to perform a pre-treatment such as a chemical treatment or a biological treatment, in addition to perform a mechanical treatment. In particular, if hydrophilic functional groups (for example, carboxy groups, cationic groups, phosphoric acid groups, etc.) are introduced into hydroxy groups on the surface of cellulose by a chemical treatment, electrical repulsion is generated between ions and also, the ions are hydrated, so that dispersibility in an aqueous solvent can be significantly improved. Thus, energy efficiency of fibrillation is increased, compared with a case of not performing a chemical treatment.

For example, Patent Document 1 discloses a method for producing ultrafine cellulose fibers, comprising a step of treating a fiber raw material comprising cellulose with at least one type of compound selected from phosphorus oxoacids or salts thereof, and a step of performing a defibration treatment on the resultant. Patent Document 2 discloses a method for producing phosphoric acid esterified ultrafine cellulose fibers, comprising a step of allowing a compound having a phosphoric acid group and/or a salt thereof to act on a fiber raw material comprising cellulose in the coexistence of urea and/or a derivative thereof, so as to introduce the phosphoric acid group into the fiber raw material, and a step of performing a fibrillation treatment on the resultant.

Patent Document 3 discloses a method for producing ultrafine cellulose fibers, comprising adding an additive (A) consisting of at least any one of phosphorous acids and phosphorous acid metal salts and an additive (B) consisting of at least any one of urea and urea derivatives to cellulose fibers, and heating and washing the obtained mixture, followed by defibration.

The document JP 2018-199891 A discloses a manufacturing method of cellulose fine fibers, wherein cellulose fiber is added with an additive (A) composed of at least one of phosphorous acids and phosphorous acid metal salts and an additive (B) composed of at least one of urea and urea derivatives, heated, washed, and fibrillated. The cellulose fine fiber has a fiber width of 1-1000 nm, and a part of hydroxy groups of the cellulose fiber is substituted with a functional group represented by a specified structural formula and introduced with phosphorous acid esters. The document refers to a manufacturing method of cellulose fine fiber for which a problem with respect to yellowing of obtained cellulose fine fiber has been resolved.

The document Inagaki, Norihiro et al. discloses the phosphorylation of cellulose fibers by heating ground filter paper or bleached and mercerized cotton broadcloth with phosphorous acid in the presence of urea. The document discloses a degree of esterification ranging from 0.59 to 2.0.

The document WO 2017/170908 A1 relates to a production method for a fibrous cellulose having a fiber width of up to 1000 nm, the production method comprising: a step (A) for obtaining crosslinked phosphorylated cellulose fibers by introducing phosphate groups into cellulose fibers and forming a crosslinked structure with the phosphate groups; a step (B) for obtaining crosslink-broken phosphorylated cellulose fibers by breaking a part or all of the crosslinked structure; and a step (C) for obtaining a fibrous cellulose having a fiber width of up to 1000 nm by performing a mechanical processing on the crosslink-broken phosphorylated cellulose fibers, wherein a crosslinked structure of 0.05-2.0 mmol/g is formed in the step (A), and the step (B) is a step in which hydrolyzation of the crosslinked structure is conducted in an aqueous solvent of at least pH3. The document addresses the problem of providing a microfibrous cellulose production method that allows production of a microfibrous cellulose having phosphate groups efficiently and with a high yield.

Prior Art Documents

Patent Documents

Patent Document 1: Japanese Patent Publication No. 2013-127141 A
Patent Document 2: International Publication WO2014/185505
Patent Document 3: International Publication WO2018/159473
Patent Document 4: JP 2018-199891 A
Patent Document 5: WO 2017/170908 A1

Non-patent document: Inagaki, Norihiro et al.; "Phosphorylation of cellulose with phosphorous acid and thermal degradation of the product", Journal of Applied Polymer Science, vol. 20, no. 10 (1976) pages 2829-2836.Summary of Invention Object to be Solved by the Invention

As described above, ultrafine cellulose fibers having phosphorus oxoacid groups have been known. The present inventors had conducted studies regarding ultrafine cellulose fibers having phosphorous acid groups. As a result, it was found that when the time required for a phosphorylation treatment is extended in order to introduce a large number of phosphorus oxoacid groups including phosphorous acid groups into cellulose fibers, the phosphorous acid groups may be unintentionally dissociated or the ultrafine cellulose fibers having phosphorous acid groups may turn yellow in some cases. In addition, the transparency of a composition obtained using such ultrafine cellulose fibers tended to be decreased.

Hence, in order to solve the problem of the prior art technique, the present inventors have conducted studies for the purpose of enhancing the transparency of a composition obtained using ultrafine cellulose fibers having phosphorous acid groups, while suppressing the yellowing of the ultrafine cellulose fibers.

Means for Solving the Object

As a result of intensive studies directed towards achieving the aforementioned object, the present inventors have found that, in a step of producing ultrafine cellulose fibers, a phosphorylation treatment is carried out multiple times, and the decomposition percentage of urea and/or a urea derivative in each treatment step is set to be a predetermined value or less, so that the present inventors have succeeded in enhancing the transparency of a composition obtained using ultrafine cellulose fibers having phosphorous acid groups, while suppressing the yellowing of the ultrafine cellulose fibers.

Specifically, the present invention has the following configuration.

[1] A method for producing cellulose fibers, comprising:

mixing a compound having a phosphorous acid group and/or a salt thereof and urea and/or a urea derivative into a cellulose raw material to obtain a cellulose raw material having a phosphorous acid group or a phosphorous acid group-derived substituent, wherein
the step of obtaining the cellulose raw material having a phosphorous acid group or a phosphorous acid group-derived substituent includes a plurality of single cycle steps, wherein, in the single cycle step, the compound having a phosphorous acid group and/or the salt thereof and the urea and/or the urea derivative are mixed into the cellulose raw material, and the obtained mixture is then heated, and
the decomposition percentage of the urea and/or the urea derivative in the single cycle step is 95% or less measured as described according to the description.

[2] The method according to [1], wherein
the heat treatment time in each single cycle step is 1 second or more and 5000 seconds or less, wherein preferably the heat treatment time in each single cycle step is 100 seconds or more and 900 seconds or less.

[3] The method according to [1], wherein
the molar mass of the phosphorous atoms contained in the compound having a phosphorous acid group and/or a salt thereof is defined as P and the molar mass of the urea and/or the urea derivative is defined as N, the value of N/P is 3.5 or more and 50 or less.

[4] Cellulose fibers obtainable by the method according to any one of [1] to [3] having a fiber width of 1000 nm or less measured as described according to the description and having a phosphorous acid group or a phosphorous acid group-derived substituent, wherein

the amount of the phosphorous acid group or the phosphorous acid group-derived substituent introduced is 1.35

mmol/g or more as measured by a neutralization titration method, and
when a sheet is formed under the following Condition (a), the YI value of the sheet is 6.0 or less:
Condition (a):
a cellulose fiber-dispersed solution having a solid concentration of 0.5% by mass is produced, and 20 parts by mass of a polyethylene oxide aqueous solution having a concentration of 0.5% by mass is added to 100 parts by mass of the cellulose fiber-dispersed solution to obtain a coating solution; and the coating solution is applied onto a base material to form a sheet having a basis weight of 50 g/$m^2$.

[5] The cellulose fibers according to [4], wherein when a sheet is formed under the Condition (a), the YI value of the sheet is 3.0 or less.

[6] The cellulose fibers according to [4] or [5], wherein when a sheet is formed under the Condition (a), the YI value of the sheet is 1.5 or less.

[7] A cellulose fiber-containing composition comprising the cellulose fibers according to any one of [4] to [6].

[8] The cellulose fiber-containing composition according to [7], comprising a solvent.

[9] The cellulose fiber-containing composition according to [8], wherein the solvent is water, and when the solid concentration is set to be 0.2% by mass, the total light transmittance is 80% or more, wherein total light transmittance of the liquid composition is a value measured in accordance with JIS K 7361.

[10] The cellulose fiber-containing composition according to [7], wherein the polymerization degree of the cellulose fibers before fibrillation is 500 or more as calculated from the viscosity of a pulp measured in accordance with Tappi T230.

[11] A molded body formed from the cellulose fibers according to any one of [4] to [6] or the cellulose fiber-containing composition according to any one of [7] to [10].

[12] The molded body according to [11], which is a sheet.

Advantageous Effects of Invention

According to the present invention, the transparency of a composition obtained using ultrafine cellulose fibers having phosphorous acid groups can be enhanced, while suppressing the yellowing of the ultrafine cellulose fibers.

Brief Description of Drawings

Figure 1 is a graph showing the relationship between the amount of NaOH added dropwise to a slurry containing cellulose fibers having phosphorus oxoacid groups and a pH value.

Embodiments of Carrying out the Invention

Hereinafter, the present invention will be described in detail. The explanation for components described below will be based on representative embodiments or specific examples; however, the present invention will not be limited to such embodiments.

(Cellulose fibers)

The present invention relates to cellulose fibers obtainable by the method according to the invention having a fiber width of 1000 nm or less and having a phosphorous acid group or a phosphorous acid group-derived substituent. Herein, the amount of the phosphorous acid group or the phosphorous acid group-derived substituent introduced is 1.35 mmol/g or more, and when a sheet is formed under the above-described Condition (a), the YI value of the sheet is 6.0 or less. Besides, in the present description, a phosphorous acid group or a phosphorous acid group-derived substituent is simply referred to as a "phosphorous acid group" at times.

Since the cellulose fibers of the present invention have the above-described configuration, the transparency of a composition obtained using ultrafine cellulose fibers having phosphorous acid groups can be enhanced, while suppressing the yellowing of the ultrafine cellulose fibers. For example, when a molded body such as a sheet is formed using

ultrafine cellulose fibers having phosphorous acid groups, heat is applied in the molding step. In such a case, the yellowing of the ultrafine cellulose fibers is suppressed, and as a result, a molded body having less yellowing can be obtained. In addition, the transparency of a dispersed solution or a molded body comprising such ultrafine cellulose fibers can be enhanced.

In general, when the transparency of a dispersed solution, etc. comprising ultrafine cellulose fibers is intended to be enhanced, the defibration degree of the fibers is enhanced by introducing many anionic groups such as phosphorous acid groups into the fibers. Herein, when phosphorous acid groups are intended to be introduced into cellulose fibers, the time required for a phosphorylation treatment is assumed to be extended. However, the present inventors have discovered that, in such a case, dissociation of the phosphorous acid groups is promoted in some cases. Moreover, it has been confirmed that when the phosphorylation treatment time is extended, the cellulose fibers turn yellow. Furthermore, the transparency of a composition comprising the ultrafine cellulose fibers has tended to be decreased. Hence, in the present invention, the phosphorylation treatment time was not simply extended, but a plurality of phosphorus oxoacid group introduction steps were established. Further, the decomposition percentage of urea in each step was appropriately controlled, so that the amount of phosphorous acid groups introduced into cellulose fibers was increased. When such a production method is adopted, the amount of phosphorous acid groups introduced can be increased, and the yellowing of the cellulose fibers can be suppressed. Further, since the amount of phosphorous acid groups introduced can be increased, the transparency of a composition comprising ultrafine cellulose fibers is also improved.

When a sheet is formed under the above-described Condition (a), the YI value of the sheet may be 6.0 or less, and it is preferably 4.5 or less, more preferably 3.0 or less, and further preferably 1.5 or less. The lower limit value of the YI value of the sheet is not particularly limited, and it may also be 0.0. The YI value of the sheet is a value measured in accordance with JIS K 7373. As a measurement device, for example, Colour Cute i, manufactured by Suga Test Instruments Co., Ltd. can be used.

When the cellulose fibers of the present invention are dispersed in water to obtain a dispersed solution having a solid concentration of 0.2% by mass, the total light transmittance of the dispersed solution is preferably 80% or more, more preferably 90% or more, further preferably 95% or more, and particularly preferably 98% or more. Herein, the total light transmittance of the dispersed solution is a value measured in accordance with JIS K 7361. The total light transmittance of the dispersed solution is measured using a hazemeter. In this measurement, a liquid glass cell having an optical path length of 1 cm is used. Besides, the zero point is measured with ion exchange water which is placed in the same glass cell. Before the measurement, the dispersed solution is left at rest under the environment of 23°C and a relative humidity of 50% for 24 hours, so that the liquid temperature of the dispersed solution is set to be 23°C.

As mentioned above, when the transparency of a dispersed solution, etc. comprising ultrafine cellulose fibers has conventionally been enhanced, the defibration degree of the fibers has been enhanced by introducing many anionic groups such as phosphorous acid groups into the fibers. Herein, when phosphorous acid groups are intended to be introduced into cellulose fibers, the phosphorylation treatment time is assumed to be extended. However, the present inventors have discovered that, in such a case, the polymerization degree of the cellulose fibers before fibrillation is tended to be decreased. Hence, the present inventors have conducted intensive studies, and as a result, the inventors have succeeded in suppressing a reduction in the polymerization degree of the cellulose fibers before fibrillation by performing the phosphorus oxoacid group introduction step multiple times, and further, by appropriately controlling the decomposition percentage of urea in each step. As a result, the present inventors have found that the yellowing of the obtained cellulose fibers is suppressed by doing so. Moreover, the present inventors have found that when the cellulose fibers are fibrillated, the yellowing of ultrafine cellulose fibers can be more effectively suppressed, and also that the transparency of a composition comprising the ultrafine cellulose fibers can be enhanced.

The polymerization degree of the cellulose fibers before fibrillation is preferably 500 or more, more preferably 550 or more, and further preferably 600 or more. On the other hand, the polymerization degree of the cellulose fibers is preferably 2000 or less. By setting the polymerization degree of the cellulose fibers before fibrillation within the above-described range, when the fibrillated ultrafine cellulose fibers are dispersed in a dispersion medium to obtain a dispersed solution, a highly transparent dispersed solution can be easily obtained. Moreover, when a sheet is formed from a dispersion solution comprising the ultrafine cellulose fibers, a sheet having a low YI value can be easily obtained. It is to be noted that the cellulose fibers before fibrillation are, for example, cellulose fibers having a fiber width of greater than 1000 nm.

The polymerization degree of the cellulose fibers is a value that is calculated from the viscosity of a pulp measured in accordance with Tappi T230. Specifically, the cellulose fibers as measurement targets are dispersed in a copper ethylenediamine aqueous solution, the viscosity thereof is then measured (defined as $\eta 1$), and the blank viscosity is then measured using only the dispersion medium (defined as $\eta 0$). Thereafter, a specific viscosity ($\eta sp$) and an intrinsic viscosity ($[\eta]$) are calculated according to the following equations:

$$\eta sp = (\eta 1 / \eta 0) - 1,$$

and

$$[\eta] = \eta sp / (c(1 + 0.28 \times \eta sp)).$$

In the above equation, c indicates the concentration of the cellulose fibers upon the measurement of the viscosity.
Further, polymerization degree (DP) is calculated according to the following equation:

$$DP = 1.75 \times [\eta].$$

Since this polymerization degree is an average polymerization degree measured by a viscosity method, it is also referred to as a "viscosity average polymerization degree."
In the present invention, the fiber width of the cellulose fibers is 1000 nm or less. The fiber width of the cellulose fibers is preferably 100 nm or less, and more preferably 8 nm or less. Thereby, the dispersibility of the cellulose fibers in a solvent can be more effectively enhanced. It is to be noted that, in the present description, the cellulose fibers having a fiber width of 1000 nm or less are also referred to as "ultrafine cellulose fibers."
The fiber width of the cellulose fibers can be measured, for example, by electron microscopic observation. The average fiber width of the cellulose fibers may be greater than 1000 nm or may also be 1000 nm or less. For example, when the average fiber width of the cellulose fibers is greater than 1000 nm, it is preferably more than 1 μm and 50 μm or less, more preferably more than 1 μm and 40 μm or less, and further preferably more than 1 μm and 30 μm or less. On the other hand, when the average fiber width of the cellulose fibers is 1000 nm or less, it is preferably 2 nm or more and 1000 nm or less, more preferably 2 nm or more and 100 nm or less, further preferably 2 nm or more and 50 nm or less, and particularly preferably 2 nm or more and 10 nm or less. It is to be noted that the cellulose fibers are, for example, monofibrous cellulose.
The average fiber width of the cellulose fibers is measured as follows, for example, using an electron microscope. First, an aqueous suspension of the cellulose fibers having a concentration of 0.05% by mass or more and 0.1% by mass or less is prepared, and this suspension is casted onto a hydrophilized carbon film-coated grid as a sample for TEM observation. If the sample contains wide fibers, SEM images of the surface of the suspension casted onto glass may be observed. Subsequently, the sample is observed using electron microscope images taken at a magnification of 1000x, 5000x, 10000x, or 50000x, depending on the widths of fibers used as observation targets. However, the sample, the observation conditions, and the magnification are adjusted so as to satisfy the following conditions:

(1) A single straight line X is drawn in any given portion in an observation image, and 20 or more fibers intersect with the straight line X.
(2) A straight line Y, which intersects perpendicularly with the aforementioned straight line in the same image as described above, is drawn, and 20 or more fibers intersect with the straight line Y.

The widths of the fibers intersecting the straight line X and the straight line Y in the observation image meeting the above-described conditions are visually read. Three or more sets of observation images of surface portions, which are at least not overlapped, are obtained. Thereafter, the widths of the fibers intersecting the straight line X and the straight line Y are read in each image. Thereby, at least 120 fiber widths (20 fibers $\times$ 2 $\times$ 3 = 120) are thus read. The average value of the read fiber widths is defined to be the average fiber width of the cellulose fibers.
The fiber length of the cellulose fibers is not particularly limited. When the fiber width of the cellulose fibers is greater than 1000 nm, the fiber length is, for example, preferably 0.1 mm or more, and more preferably 0.6 mm or more. On the other hand, the fiber length is preferably 50 mm or less, and more preferably 20 mm or less. When the fiber width of the cellulose fibers is 1000 nm or less, the fiber length is, for example, preferably 0.1 μm or more. On the other hand, the fiber length is preferably 1000 μm or less, more preferably 800 μm or less, and further preferably 600 μm or less. By setting the fiber length within the above-described range, destruction of the crystalline region of the cellulose fibers can be suppressed. In addition, the viscosity of a slurry of the cellulose fibers can also be set within an appropriate range. It is to be noted that the fiber length of the cellulose fibers can be obtained by an image analysis using TEM, SEM or AFM.
The cellulose fibers preferably have a type I crystal structure. Herein, the fact that the cellulose fibers have a type I crystal structure may be identified by a diffraction profile obtained from a wide angle X-ray diffraction photograph using CuK$\alpha$ ($\lambda$ = 1.5418 Å) monochromatized with graphite. Specifically, it may be identified based on the fact that there are typical peaks at two positions near 2$\theta$ = 14° or more and 17° or less, and near 2$\theta$ = 22° or more and 23° or less. The percentage of the type I crystal structure occupied in the ultrafine cellulose fibers is, for example, preferably 30% or more, more preferably 40% or more, and further preferably 50% or more. Thereby, more excellent performance can be expected, in terms of heat resistance and the expression of low linear thermal expansion. The crystallinity can be obtained by measuring an X-ray diffraction profile and obtaining it according to a common method (Seagal et al., Textile Research Journal, Vol. 29, p. 786, 1959).

The aspect ratio (fiber length/fiber width) of the cellulose fibers is not particularly limited, and for example, it is preferably 20 or more and 10000 or less, and more preferably 50 or more and 1000 or less. By setting the aspect ratio at the above-described lower limit value or more, a sheet comprising ultrafine cellulose fibers is easily formed. By setting the aspect ratio at the above-described upper limit or less, when the cellulose fibers are treated, for example, in the form of a dispersed solution, operations such as dilution are preferably easily handled.

The cellulose fibers in the present embodiment have, for example, both a crystalline region and an amorphous region. In particular, ultrafine cellulose fibers, which have both a crystalline region and an amorphous region and also have a high aspect ratio, are realized by the after-mentioned method for producing ultrafine cellulose fibers.

The cellulose fibers have a phosphorus oxoacid group or a phosphorus oxoacid group-derived substituent (which is simply referred to as a "phosphorus oxoacid group" at times). Examples of the phosphorus oxoacid group-derived substituent may include salts of the phosphorus oxoacid groups and substituents such as a phosphorus oxoacid ester group.

The amount of phosphorus oxoacid groups introduced into the cellulose fibers can be measured, for example, by a neutralization titration method. According to the measurement by the neutralization titration method, while an alkali such as a sodium hydroxide aqueous solution is added to a slurry containing the obtained cellulose fibers, a change in the pH is obtained, so that the introduced amount is measured.

Figure 1 is a graph showing the relationship between the amount of NaOH added dropwise to a slurry containing cellulose fibers having phosphorus oxoacid groups and a pH value. The amount of phosphorus oxoacid groups introduced into the cellulose fibers is measured, for example, as follows.

When the cellulose fibers used as measurement targets are cellulose fibers before fibrillation, first, the cellulose fibers are subjected to an acid treatment. In the acid treatment of the cellulose fibers, the cellulose fibers are diluted with ion exchange water to a content of 2% by mass, and then, while stirring, a sufficient amount of 1 N hydrochloric acid aqueous solution is slowly added thereto. Subsequently, this pulp suspension is stirred for 15 minutes and is then dehydrated to obtain a dehydrated sheet, which is then diluted with ion exchange water again, and 1000 parts by mass of a 1 N hydrochloric acid aqueous solution is added to 100 parts by mass (absolute dry mass) of the cellulose fibers. By repeating this operation five times, the phosphorus oxoacid groups comprised in the cellulose fibers are completely converted to acid-type phosphorus oxoacid groups. Moreover, the operation of uniformly dispersing this pulp suspension by stirring and then subjecting it to filtration and dehydration to obtain a dehydrated sheet is repeated, so that redundant hydrochloric acid is fully washed away. Thereafter, the obtained acid-type cellulose fibers are diluted to a content of 0.2% by mass, so as to produce a suspension. As necessary, after completion of the acid treatment, a defibration treatment that is similar to the after-mentioned defibration treatment step may be performed on the measurement target. The after-mentioned neutralization titration using alkali is carried out on the obtained suspension.

When the cellulose fibers used as measurement targets are ultrafine cellulose fibers, first, a slurry containing the ultrafine cellulose fibers is treated with a strongly acidic ion exchange resin. As necessary, before the treatment with a strongly acidic ion exchange resin, a defibration treatment that is similar to the after-mentioned defibration treatment step may be performed on the measurement target. The after-mentioned neutralization titration using alkali is carried out on the slurry treated with the strongly acidic ion exchange resin.

In the neutralization titration using alkali, while adding a sodium hydroxide aqueous solution, a change in the pH value is observed, and a titration curve as shown in the upper portion of Figure 1 is obtained. In the titration curve shown in the upper portion of Figure 1, a pH value measured with respect to the amount of alkali added is plotted. On the other hand, in the titration curve shown in the lower portion of Figure 1, an increment (a derivative) (1/mmol) of the pH value with respect to the amount of alkali added is plotted. According to this neutralization titration, in a curve formed by plotting pH values measured with respect to the amount of alkali added, two points are confirmed, in which an increment (a derivative of pH with respect to the amount of alkali added dropwise) becomes maximum. Regarding these two points, a maximum point of an increment firstly obtained after addition of alkali is referred to as a first end point, whereas a maximum point of an increment subsequently obtained after addition of alkali is referred to as a second end point. The amount of alkali required from initiation of the titration until the first end point becomes equal to the first amount of dissociated acid in the cellulose fibers comprised in the slurry used in the titration. The amount of alkali required from the first end point until the second end point becomes equal to the second amount of dissociated acid in the cellulose fibers comprised in the slurry used in the titration. Furthermore, the amount of alkali required from initiation of the titration until the second end point becomes equal to the total amount of dissociated acid in the slurry used in the titration. Further, the value obtained by dividing the amount of alkali required from initiation of the titration until the first end point by a solid content (g) in the slurry to be titrated becomes the amount of phosphorus oxoacid groups introduced (mmol/g). Besides, the simple term "the amount of the phosphorus oxoacid groups introduced (or the amount of the phosphorus oxoacid groups)" refers to the first amount of dissociated acid.

In Figure 1, the region ranging from initiation of the titration until the first end point is referred to as a first region, and the region ranging from the first end point until the second end point is referred to as a second region. For example, when the phosphorus oxoacid groups are phosphoric acid groups causing condensation, the amount of weakly acidic groups in the phosphorus oxoacid groups (which is also referred to as a "second amount of dissociated acid" in the present

description) is apparently reduced, so that the amount of the alkali required for the second region is decreased as compared with the amount of the alkali required for the first region. Meanwhile, the amount of strongly acidic groups in the phosphorus oxoacid groups (which is also referred to as a "first amount of dissociated acid" in the present description) corresponds to the amount of phosphorus atoms, regardless of the presence or absence of condensation. On the other hand, when the phosphorus oxoacid groups are phosphorous acid groups, since weakly acidic groups are not present in the phosphorus oxoacid groups, the amount of the alkali required for the second region may be decreased, or the amount of the alkali required for the second region may become zero in some cases. In such a case, in the titration curve, there is only one point in which an increment of the pH value becomes maximum.

In the measurement of the amount of phosphorus oxoacid groups according to the titration method, when the amount of a single droplet of a sodium hydroxide aqueous solution added dropwise is too large, or when the titration interval is too short, the amount of phosphorus oxoacid groups may be measured to be lower than the actual value and thus, a precise value may not be obtained in some cases. With regard to an appropriate amount of a sodium hydroxide aqueous solution added dropwise and a titration interval, it is desired that, for example, a 0.1 N sodium hydroxide aqueous solution is titrated in each amount of 10 to 50 μL for 5 to 30 seconds. Moreover, in order to eliminate the influence of carbon dioxide dissolved in a cellulose fiber-containing slurry, it is desired that, for example, the measurement is carried out, while inert gas such as nitrogen gas is blown into the slurry from 15 minutes before initiation of the titration until termination of the titration.

In a first aspect not according to the present invention, when the first amount of dissociated acid (mmol/g) in the cellulose fibers is set to be A1 and the total amount of dissociated acid (mmol/g) in the cellulose fibers is set to be A2, A1 may be 1.35 mmol/g or more, and it is preferably 1.50 mmol/g or more, more preferably 1.75 mmol/g or more, and further preferably 2.00 mmol/g or more. On the other hand, A1 is preferably 5.20 mmol/g or less, more preferably 3.65 mmol/g or less, and further preferably 3.00 mmol/g or less. In the present description, since A1 has the same meanings as "the amount of phosphorus oxoacid groups introduced" or "the amount of phosphorus oxoacid groups," the amount of phosphorus oxoacid groups introduced (or the amount of phosphorus oxoacid groups) is also preferably within the above-described range. Herein, the unit mmol/g indicates the amount of substituents per 1 g (mass) of the cellulose fibers, when the counterions of the phosphorus oxoacid groups are hydrogen ions ($H^+$). By setting the amount of phosphorus oxoacid groups introduced (A1) within the above-described range, it may become easy to perform fibrillation on the fiber raw material, and the stability of the cellulose fibers can be enhanced. In addition, by setting the amount of phosphorus oxoacid groups introduced within the above-described range, when a composition such as a dispersed solution or a sheet is formed, the formed composition or sheet can exhibit high transparency. It is to be noted that the value of A1' is also preferably within the above-described range.

In a first aspect not according to the present invention, the value of A1/A2 is preferably 0.51 or more, more preferably 0.64 or more, and further preferably 0.80 or more. Moreover, the upper limit value of the value of A1/A2 is preferably 1.0. Herein, the first amount of dissociated acid (A1) in the cellulose fibers is a value obtained by dividing the amount (mmol) of alkali necessary from initiation of the titration until the first end point by the solid content (g) in the slurry to be titrated in the above-mentioned titration curve. That is to say, the first amount of dissociated acid (A1) is a value obtained by dividing the substance amount (mmol) of acid ionized and neutralized at the first stage by the solid content (g) in the slurry to be titrated. On the other hand, the total amount of dissociated acid (A2) in the cellulose fibers is a value obtained by dividing the amount (mmol) of alkali necessary from initiation of the titration until the second end point by the solid content (g) in the slurry to be titrated. That is to say, the total amount of dissociated acid (A2) is a value obtained by dividing the substance amount (mmol) of total acids ionized and neutralized in all of the stages by the solid content (g) in the slurry to be titrated. Hence, as the value of A1/A2 gets close to 1, it means that the amount of weak acid (for example, the amount of weakly acidic groups in phosphorus oxoacid groups) becomes small. In the first aspect of the present invention, by setting the value of A1/A2 within the above-described range, the transparency of a composition obtained using ultrafine cellulose fibers can be enhanced, while suppressing the yellowing of the ultrafine cellulose fibers. It is to be noted that the value of A1'/A2' is also preferably within the above-described range.

Besides, the value of A1/A2 gets close to 1 in the following two cases, namely, in a case where phosphoric acid groups are condensed, and in a case where phosphorous acid groups are present. Examples of a method of determining whether the factor by which A1/A2 gets close to 1 is the condensation of phosphoric acid groups or the presence of phosphorous acid groups may include: a method of performing the above-described titration operations, after a treatment of cleaving the condensation structure of phosphoric acid, such as acid hydrolysis, has been performed; and a method of performing the above-described titration operations, after a treatment of converting phosphorous acid groups to phosphoric acid groups, such as an oxidation treatment, has been performed.

The phosphorus oxoacid group or the phosphorus oxoacid group-derived substituent is a substituent represented by, for example, the following formula (1). Examples of the phosphorus oxoacid group-derived substituent may include salts of the phosphorus oxoacid groups and substituents such as a phosphorus oxoacid ester group. Moreover, the phosphorus oxoacid group-derived substituent may be comprised as a group obtained by condensation of the phosphorus oxoacid group (for example, a pyrophosphoric acid group) in the cellulose fibers.

[Formula 1]

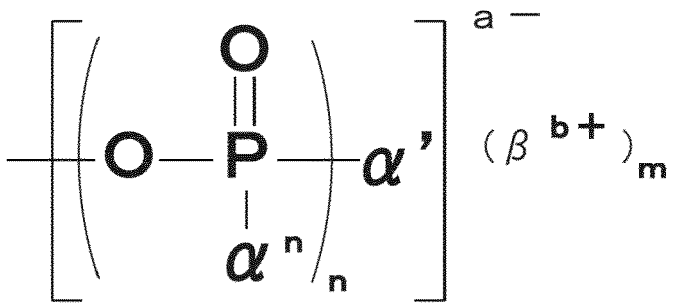

(1)

In the above Formula (1), a, b, and n each represent a natural number, and m represents any given number (provided that a = b x m); an "a" number of $\alpha^1$, $\alpha^2$, ..., $\alpha^n$ and $\alpha'$ is $O^-$, and the rest is either R or OR. Herein, R each represents a hydrogen atom, a saturated straight chain hydrocarbon group, a saturated branched chain hydrocarbon group, a saturated cyclic hydrocarbon group, an unsaturated straight chain hydrocarbon group, an unsaturated branched chain hydrocarbon group, an unsaturated cyclic hydrocarbon group, an aromatic group, or a derivative group thereof. R may also be a group derived from a cellulose molecular chain. Among others, either $\alpha^n$ or $\alpha'$ is preferably R, and R is particularly preferably a hydrogen atom. In addition, n is preferably 1. That is, the phosphorus oxoacid group is preferably a phosphorous acid group. Besides, the phosphorous acid group may also be a substituent derived from the phosphorous acid group.

In the present invention, the cellulose fibers have a phosphorous acid group or a phosphorous acid group-derived substituent. That is, in the formula (1), an a number of $\alpha^n$ or $\alpha'$ is $O^-$, and either $\alpha^n$ or $\alpha'$ is R. Among others, R is preferably a hydrogen atom.

It is to be noted that some phosphorus oxoacid groups or phosphorus oxoacid group-derived substituents may be phosphoric acid groups or phosphoric acid group-derived substituents, or may also be groups obtained by condensation of the phosphorus oxoacid groups (for example, pyrophosphoric acid groups). Thus, when the cellulose fibers have both a phosphorous acid group or a phosphorous acid group-derived substituent (hereinafter also simply referred to as a "phosphorous acid group") and a **phosphoric** acid group or a phosphoric acid group-derived substituent (hereinafter also simply referred to as a "phosphoric acid group") as substituents, the percentage of the phosphorous acid groups in the substituents represented by the formula (1) is preferably 10% by mass or more, more preferably 20% by mass or more, and further preferably 30% by mass or more.

Examples of the saturated straight chain hydrocarbon group represented by R in the formula (1) may include a methyl group, an ethyl group, an n-propyl group, and an n-butyl group, but are not particularly limited thereto. Examples of the saturated branched chain hydrocarbon group may include an i-propyl group and a t-butyl group, but are not particularly limited thereto. Examples of the saturated cyclic hydrocarbon group may include a cyclopentyl group and a cyclohexyl group, but are not particularly limited thereto. Examples of the unsaturated straight chain hydrocarbon group may include a vinyl group and an allyl group, but are not particularly limited thereto. Examples of the unsaturated branched chain hydrocarbon group may include an i-propenyl group and a 3-butenyl group, but are not particularly limited thereto. Examples of the unsaturated cyclic hydrocarbon group may include a cyclopentenyl group and a cyclohexenyl group, but are not particularly limited thereto. Examples of the aromatic group may include a phenyl group and a naphthyl group, but are not particularly limited thereto.

Moreover, examples of the derivative group of the R may include functional groups such as a carboxyl group, a hydroxyl group or an amino group, in which at least one type selected from the functional groups is added to or substituted with the main chain or side chain of the above-described various types of hydrocarbon groups, but are not particularly limited thereto. Furthermore, the number of carbon atoms constituting the main chain of the above-described R is not particularly limited, and it is preferably 20 or less, and more preferably 10 or less. By setting the number of carbon atoms constituting the main chain of the R within the above-described range, the molecular weight of phosphorus oxoacid groups can be adjusted within a suitable range, permeation thereof into a fiber raw material can be facilitated, and the yield of the ultrafine cellulose fibers can also be enhanced.

$\beta^{b+}$ is a mono- or more-valent cation composed of an organic or inorganic matter. Examples of the mono- or more-valent cation composed of an organic matter may include an aliphatic ammonium and an aromatic ammonium, and examples of the mono- or more-valent cation composed of an inorganic matter may include alkali metal ions such as sodium, potassium or lithium ions, divalent metal cations such as calcium or magnesium ions, and hydrogen ions, but are not particularly limited thereto. These can be applied alone as a single type or in combination of two or more types. As such mono- or more-valent cations composed of an organic or inorganic matter, sodium or potassium ions, which hardly cause the yellowing of a fiber raw material containing $\beta$ upon heating and are industrially easily applicable, are preferable, but are

not particularly limited thereto.

Whether the cellulose fibers have phosphorous acid groups as substituents can be confirmed by measuring the infrared absorption spectrum of a dispersed solution containing the cellulose fibers, and then observing absorption based on phosphonic acid groups as tautomers of phosphorous acid groups, P = O, around 1210 $cm^{-1}$. Moreover, whether the cellulose fibers have phosphorous acid groups as substituents can also be confirmed by a method of confirming a chemical shift using NMR or a method of combining an elemental analysis with various types of titration methods.

The cellulose fibers may have other anionic groups, in addition to the phosphorus oxoacid groups or the phosphorus oxoacid group-derived substituents. An example of such an anionic group may be a carboxy group originally comprised in pulp.

(Method for producing cellulose fibers)

The present invention relates to a method for producing cellulose fibers. The method for producing cellulose fibers according to a first aspect not according to the present invention is a method for producing cellulose fibers, in which when the first amount of dissociated acid in the cellulose fibers is set to be A1 and the total amount of dissociated acid in the cellulose fibers is set to be A2, the value of A1/A2 is 0.51 or more. The production method of the first aspect comprises a step of mixing phosphorus oxoacid and/or a salt thereof and urea and/or a urea derivative into a cellulose raw material, so as to obtain a cellulose raw material having a phosphorus oxoacid group or a phosphorus oxoacid group-derived substituent. This step of obtaining a cellulose raw material having a phosphorus oxoacid group or a phosphorus oxoacid group-derived substituent includes a plurality of single cycle steps, wherein, in the single cycle step, the phosphorus oxoacid and/or the salt thereof and the urea and/or the urea derivative are mixed into the cellulose raw material, and the obtained mixture is then heated, and the decomposition percentage of the urea and/or the urea derivative in the single cycle step is 95% or less.

The method for producing cellulose fibers according to the present invention is a method for producing cellulose fibers having a fiber width of 1000 nm or less and having a phosphorous acid group or a phosphorous acid group-derived substituent. The production method according to the present invention comprises a step of mixing a compound having a phosphorous acid group and/or a salt thereof and urea and/or a urea derivative into a cellulose raw material, so as to obtain a cellulose raw material having a phosphorous acid group or a phosphorous acid group-derived substituent. The step of obtaining a cellulose raw material having a phosphorous acid group or a phosphorous acid group-derived substituent includes a plurality of single cycle steps, wherein, in the single cycle step, the compound having a phosphorous acid group and/or the salt thereof and the urea and/or the urea derivative are mixed into the cellulose raw material, and the obtained mixture is then heated, and the decomposition percentage of the urea and/or the urea derivative in the single cycle step is 95% or less.

It is to be noted that, hereinafter, the step of obtaining a cellulose raw material having a phosphorus oxoacid group or a phosphorus oxoacid group-derived substituent, or the step of obtaining a cellulose raw material having a phosphorous acid group or a phosphorous acid group-derived substituent, is also referred to as a phosphorus oxoacid group introduction step.

In the method for producing cellulose fibers of the present invention a compound having a phosphorous acid group and/or a salt thereof and urea and/or a urea derivative are preferably mixed into a cellulose raw material. Herein, carboxyl groups and amino groups possessed by the urea form hydrogen bonds with phosphorous acid groups possessed by the compound having the phosphorous acid groups, so that ionization of hydrogen ions is suppressed. On the other hand, since the urea is decomposed by heat or the like, if it is decomposed, it is released as carbon dioxide gas or ammonia gas to the outside of the reaction system. In the method for producing cellulose fibers of the present invention, the hydrogen bonds between urea and phosphorous acid groups can be retained by suppressing the decomposition percentage of the urea and/or the urea derivative to 95% or less, and thereby, ionization of hydrogen ions from the phosphorous acid groups can be suppressed. Besides, since the pKa value of phosphorous acid is smaller than the pKa value of phosphoric acid, the hydrogen ions of phosphorous acid groups are easily ionized, and thereby, it is considered that the acidity increases in the reaction system, and that deterioration of the cellulose fibers, decomposition of the urea, and the like are easily promoted. However, in the present invention, by suppressing the decomposition percentage of the urea and/or the urea derivative to 95% or less, ionization of hydrogen ions can be suppressed even in the cellulose fibers having phosphorous acid groups, and as a result, deterioration of the cellulose fibers, etc. can be suppressed.

Since the cellulose fibers of the present invention are obtained through such a production step, when the cellulose fibers are fibrillated and the obtained ultrafine cellulose fibers are dispersed in a dispersion medium to prepare a dispersed solution, a highly transparent dispersed solution can be obtained. In addition, when a molded body such as, for example, a sheet, is formed using such a dispersion medium, a highly transparent sheet can be obtained. Moreover, the cellulose fibers and ultrafine cellulose fibers of the present invention are prevented from yellowing, and thus, when a sheet is formed from a dispersion solution comprising the ultrafine cellulose fibers, a sheet having a low YI value can be obtained.

< Cellulose raw material >

Ultrafine cellulose fibers are produced from a fiber raw material comprising cellulose (a cellulose raw material). Such a fiber raw material comprising cellulose is not particularly limited, and pulp is preferably used from the viewpoint of availability and inexpensiveness. Examples of the pulp may include wood pulp, non-wood pulp, and deinked pulp. Examples of the wood pulp may include, but are not particularly limited to, chemical pulps such as leaf bleached kraft pulp (LBKP), needle bleached kraft pulp (NBKP), sulfite pulp (SP), dissolving pulp (DP), soda pulp (AP), unbleached kraft pulp (UKP), and oxygen bleached kraft pulp (OKP); semichemical pulps such as semichemical pulp (SCP) and chemi-ground wood pulp (CGP); and mechanical pulps such as ground pulp (GP) and thermomechanical pulp (TMP, BCTMP). Examples of the non-wood pulp may include, but not particularly limited to, cotton pulps such as cotton linter and cotton lint; and non-wood type pulps such as hemp, wheat straw, and bagasse. An example of a deinked pulp may be, but is not particularly limited to, a deinked pulp using waste paper as a raw material. The pulp of the present embodiment may be used alone as a single type, or in combination of two or more types. Among the above-described pulps, for example, wood pulp and deinked pulp are preferable from the viewpoint of easy availability. Moreover, among wood pulps, for example, chemical pulp is more preferable, and kraft pulp and sulfite pulp are further preferable, from the viewpoint that it has a higher cellulose content ratio so as to enhance the yield of ultrafine cellulose fibers upon the defibration treatment, and that decomposition of cellulose in the pulp is mild, so that ultrafine cellulose fibers having a long fiber length with a high aspect ratio can be obtained. It is to be noted that if such ultrafine cellulose fibers having a long fiber length with a high aspect ratio is used, the viscosity tends to become high.

As a fiber raw material comprising cellulose, for example, cellulose comprised in Ascidiacea, or bacterial cellulose generated by acetic acid bacteria can also be utilized. In addition, fibers formed from straight-chain nitrogen-containing polysaccharide polymers such as chitin and chitosan can also be used, instead of a fiber raw material containing cellulose.

< Phosphorus oxoacid group introduction step >

The phosphorus oxoacid group introduction step according to a first aspect not according to the present invention is a step of mixing phosphorus oxoacid and/or a salt thereof and urea and/or a urea derivative into a cellulose raw material to obtain a cellulose raw material having a phosphorus oxoacid group or a phosphorus oxoacid group-derived substituent. Herein, the step of obtaining a cellulose raw material having a phosphorus oxoacid group or a phosphorus oxoacid group-derived substituent includes a plurality of single cycle steps, wherein, in the single cycle step, the phosphorus oxoacid and/or the salt thereof and the urea and/or the urea derivative are mixed into the cellulose raw material, and the obtained mixture is then heated.

Moreover, the phosphorus oxoacid group introduction step according to the present invention is a step of mixing a compound having a phosphorous acid group and/or a salt thereof and urea and/or a urea derivative into a cellulose raw material to obtain a cellulose raw material having phosphorous acid groups. Herein, the step of obtaining a cellulose raw material having a phosphorous acid group or a phosphorous acid group-derived substituent includes a plurality of single cycle steps, wherein, in the single cycle step, the phosphorous acid and/or the salt thereof and the urea and/or the urea derivative are mixed into the cellulose raw material, and the obtained mixture is then heated. In the phosphorus oxoacid group introduction step of the first aspect not according to the invention, hydroxyl groups possessed by the fiber raw material comprising cellulose react with the phosphorus oxoacid and/or the salt thereof, so that the phosphorus oxoacid groups can be introduced into the fiber raw material. In the phosphorus oxoacid group introduction step according to the invention hydroxyl groups possessed by the fiber raw material comprising cellulose react with the compound having a phosphorous acid group and/or the salt thereof, so that the phosphorous acid groups can be introduced into the fiber raw material. It is to be noted that, in the present description, a compound comprising phosphorus oxoacid and/or a salt thereof or a compound having a phosphorous acid group and/or a salt thereof may be referred to as Compound A at times, whereas urea and/or a urea derivative may be referred to as Compound B at times.

One example of the method of allowing Compound A to act on the fiber raw material in the presence of Compound B may include a method of mixing Compound A and Compound B into the fiber raw material that is in a dry or wet state, or in a slurry state. Among the fiber raw materials in these states, because of the high uniformity of the reaction, the fiber raw material that is in a dry or wet state is preferably used, and the fiber raw material in a dry state is particularly preferably used. The shape of the fiber raw material is not particularly limited, and for example, a cotton-like or thin sheet-like fiber raw material is preferable. Compound A and Compound B may be added to the fiber raw material by the method of adding Compound A and Compound B that are powdered, are dissolved in a solvent to form a solution, or are melted by being heated to a melting point or higher. Among these, because of the high uniformity of the reaction, the compounds are preferably added to the fiber raw material, in the form of a solution obtained by dissolution thereof in a solvent, or in particular, in the form of an aqueous solution. Moreover, Compound A and Compound B may be simultaneously added, or may also be added, separately. Alternatively, Compound A and Compound B may be added in the form of a mixture thereof.

The method of adding Compound A and Compound B is not particularly limited, and in a case where Compound A and Compound B are in the form of a solution, the fiber raw material may be immersed in the solution for liquid absorption, and may be then removed therefrom, or the solution may also be added dropwise onto the fiber raw material. Otherwise, Compound A and Compound B in necessary amounts may be added to the fiber raw material, or Compound A and Compound B in excessive amounts may be added to the fiber raw material and then, may be squeezed or filtrated to remove redundant Compound A and Compound B.

Compound A used in the present embodiment may be, for example, a compound having a phosphorus atom and being capable of forming an ester bond with cellulose, and Compound A comprises, at least, a compound having a phosphorous acid group and/or a salt thereof. The compound having a phosphorous acid group may be phosphorous acid, and the phosphorous acid may be, for example, 99% phosphorous acid (phosphonic acid). Examples of the salt of the compound having a phosphorous acid group may include a lithium salt, a sodium salt, a potassium salt, and an ammonium salt of phosphorous acid, and these salts may have various degrees of neutralization. Among these, from the viewpoint of achieving high efficiency in introduction of phosphorus oxoacid groups, an improving tendency of the defibration efficiency in the after-mentioned defibration step, low costs, and industrial applicability, phosphorous acid, a sodium salt of phosphorous acid, a potassium salt of phosphorous acid, or an ammonium salt of phosphorous acid is preferable, and phosphorous acid is more preferable. Besides, Compound A may comprise a compound having a phosphoric acid group and/or a salt thereof, dehydrated condensed phosphoric acid or a salt thereof, phosphoric anhydride (diphosphorus pentoxide), and the like, in addition to the compound having a phosphorous acid group and/or a salt thereof. In this case, as such phosphoric acid, those having various purities can be used, and for example, 100% phosphoric acid (orthophosphoric acid) or 85% phosphoric acid can be used. Dehydrated condensed phosphoric acid is phosphoric acid that is condensed by two or more molecules according to a dehydration reaction, and examples of such dehydrated condensed phosphoric acid may include pyrophosphoric acid and polyphosphoric acid.

The amount of Compound A added to the fiber raw material is not particularly limited, and for example, if the amount of the Compound A added is converted to a phosphorus atomic weight, the amount of phosphorus atoms added with respect to the fiber raw material (absolute dry mass) is preferably 0.5% by mass or more and 100% by mass or less, more preferably 1% by mass or more and 50% by mass or less, and further preferably 2% by mass or more and 30% by mass or less. By setting the amount of phosphorus atoms added to the fiber raw material within the above-described range, the yield of the ultrafine cellulose fibers can be further improved. On the other hand, by setting the amount of phosphorus atoms added to the fiber raw material to the above-described upper limit value or less, the balance between the effect of improving the yield and costs can be kept.

Compound B used in the present embodiment is urea and a urea derivative, as described above. Examples of Compound B may include urea, biuret, 1-phenyl urea, 1-benzyl urea, 1-methyl urea, and 1-ethyl urea. From the viewpoint of the improvement of the uniformity of the reaction, Compound B is preferably used in the form of an aqueous solution. Moreover, from the viewpoint of the further improvement of the uniformity of the reaction, an aqueous solution, in which both Compound A and Compound B are dissolved, is preferably used.

The amount of Compound B added to the fiber raw material (absolute dry mass) is not particularly limited, and for example, it is preferably 1% by mass or more and 500% by mass or less, more preferably 10% by mass or more and 400% by mass or less, and further preferably 100% by mass or more and 350% by mass or less.

Moreover, when the molar mass (mmol) of the phosphorus atoms contained in Compound A is defined as P and the molar mass (mmol) of the urea and/or the urea derivative contained in Compound B is defined as N, the value of N/P is preferably 3.5 or more, more preferably 4.0 or more, further preferably 4.5 or more, and particularly preferably 5.0 or more. On the other hand, the value of N/P is preferably 50 or less. By setting the value of N/P within the above-described range, the decomposition percentage of the urea and/or the urea derivative can be easily controlled to be 95% or less in the phosphorus oxoacid group introduction step.

In the reaction of the fiber raw material comprising cellulose with Compound A, for example, amides or amines, as well as Compound B, may be comprised in the reaction system. Examples of the amides may include formamide, dimethylformamide, acetamide, and dimethylacetamide. Examples of the amines may include methylamine, ethylamine, trimethylamine, triethylamine, monoethanolamine, diethanolamine, triethanolamine, pyridine, ethylenediamine, and hexamethylenediamine. Among these, particularly, triethylamine is known to work as a favorable reaction catalyst.

In the phosphorus oxoacid group introduction step, after Compound A, etc. has been added or mixed into the fiber raw material, the fiber raw material is preferably heated (heat treatment step). As a heat treatment temperature applied in the heat treatment step, it is preferable to select a temperature that enables an efficient introduction of phosphorus oxoacid groups such as phosphorous acid groups, while suppressing the thermal decomposition or hydrolysis reaction of fibers. Although the heat treatment temperature may change depending on the selection of a heating time and a heat source, it is preferably 50°C or higher, more preferably 100°C or higher, and further preferably 130°C or higher. On the other hand, the heat treatment temperature is preferably 250°C or lower, and more preferably 175°C or lower. In addition, apparatuses having various heating media can be utilized in the heat treatment, and examples of such an apparatus may include a stirring dryer, a rotary dryer, a disk dryer, a roll-type heater, a plate-type heater, a fluidized bed dryer, an airborne dryer, a

vacuum dryer, an infrared heating device, a far-infrared heating device, a microwave heating device, and a high-frequency drying device.

In the heat treatment according to the present embodiment, a method comprising adding Compound A to a thin sheet-like fiber raw material by impregnation or the like, and then heating the fiber raw material, or a method comprising heating a fiber raw material, while kneading or stirring the fiber raw material and Compound A using a kneader or the like, can be adopted. Thereby, the unevenness in the concentration of the Compound A in the fiber raw material can be suppressed, and phosphorus oxoacid groups such as phosphorous acid groups can be more uniformly introduced into the surface of the cellulose fibers comprised in the fiber raw material. This is considered because, when water molecules move to the surface of the fiber raw material as drying advances, Compound A dissolved therein is attracted to the water molecules due to surface tension and as a result, Compound A also moves to the surface of the fiber raw material (specifically, the unevenness in the concentration of the Compound A occurs), and because such a phenomenon can be suppressed by adopting the aforementioned method.

As a heating device used for the heat treatment, for example, a device capable of always discharging moisture retained by slurry or moisture generated by the dehydration condensation (phosphoric acid esterification) reaction of Compound A with hydroxyl groups, etc. comprised in cellulose or the like in the fiber raw material, to the outside of the device system, is preferable. Such a heating device may be, for example, a ventilation-type oven. By always discharging moisture from the device system, in addition to being able to suppress a hydrolysis reaction of phosphoric acid ester bonds, which is a reverse reaction of the phosphoric acid esterification, the acid hydrolysis of sugar chains in the fibers may also be suppressed. Thus, it becomes possible to obtain ultrafine cellulose fibers with a high axial ratio.

The time required for the heat treatment is preferably 10 seconds or more, more preferably 100 seconds or more, further preferably 200 seconds or more, and particularly preferably 300 seconds or more, from the state in which the fiber raw material comprises moisture. On the other hand, the time required for the heat treatment is preferably 10000 seconds or less, more preferably 5000 seconds or less, further preferably 3000 seconds or less, and particularly preferably 2000 seconds or less. It is to be noted that the above-described heat treatment time is a total time of heating times in all of the cycle steps. In the present embodiment, by setting the heating temperature and the heating time within an appropriate range, the amount of the phosphorus oxoacid groups introduced (A1) can be set within a preferred range.

The phosphorus oxoacid group introduction step according to the first aspect not according to the invention includes a plurality of single cycle steps, wherein, in the single cycle step, the phosphorus oxoacid and/or the salt thereof and the urea and/or the urea derivative are mixed into the cellulose raw material, and the obtained mixture is then heated. On the other hand, the phosphorus oxoacid group introduction step according to the present invention includes a plurality of single cycle steps, wherein, in the single cycle step, phosphorous acid and/or a salt thereof and urea and/or a urea derivative are mixed into the cellulose raw material, and the obtained mixture is then heated. Specifically, the single cycle step of mixing phosphorus oxoacid and/or a salt thereof, or phosphorous acid and/or a salt thereof, and urea and/or a urea derivative, into a fiber raw material, and then heating the obtained mixture, may be established for two steps, or three steps, or four or more steps. That is to say, in the phosphorus oxoacid group introduction step, the aforementioned single cycle step may be repeatedly carried out two times, three times, or four or more times. The number of repeating the single cycle steps is preferably 10 or less.

The heat treatment time in each single cycle step is preferably 1 second or more, more preferably 10 seconds or more, further preferably 50 seconds or more, and particularly preferably 100 seconds or more, from the state in which the fiber raw material comprises moisture. On the other hand, the heat treatment time in each single cycle step is preferably 5000 seconds or less, more preferably 3000 seconds or less, further preferably 2000 seconds or less, still further preferably 1000 seconds or less, and particularly preferably less than 900 seconds. In the present invention, for example, by setting the heat treatment time in each single cycle step within the above-described range, and also by repeating such a cycle multiple times, the decomposition percentage of the urea and/or the urea derivative can be controlled within an appropriate range. Otherwise, even by adjusting the additive amount of phosphorus oxoacid and/or a salt thereof, or phosphorous acid and/or a salt thereof, and urea and/or a urea derivative, or by adjusting the heating temperature, the decomposition percentage of the urea and/or the urea derivative may be controlled within an appropriate range.

Besides, the decomposition percentage of the urea and/or the urea derivative in the single cycle step may be 95% or less, and it is preferably 94% or less, and more preferably 93% or less. The lower limit value of the decomposition percentage of the urea and/or the urea derivative in the single cycle step is not particularly limited, and it is preferably 10% or more. In the method for producing cellulose fibers of the present invention, the aforementioned single cycle step is preferably established multiple times. Otherwise, the decomposition percentage of the urea and/or the urea derivative in all of the single cycle steps is preferably the above-described upper limit value or less.

Herein, the decomposition percentage of urea is a value obtained by dividing a reduction in the mass other than water evaporation (i.e., the amount of urea decomposed) in the phosphorus oxoacid introduction step (in particular, heating) by the mass of the urea added to the cellulose raw material, and then expressing the obtained value with a mass fraction. Since urea is decomposed by heat or the like and is then released as carbon dioxide gas or ammonia gas to the outside of the reaction system, the decomposition percentage of the urea is calculated according to the following method.

First, the absolute dry mass of a cellulose raw material (pulp) used in the test is measured. Subsequently, a predetermined amount of chemical solution is added to the cellulose raw material (pulp), and the mass ($m_0$) is then measured. From the composition of the chemical solution and the initial water content rate of the pulp, the amount of water added (the water amount in the system) ($m_w$) and the amount of urea added ($m_u$) are calculated. Thereafter, the impregnated cellulose raw material (pulp) is subjected to a heat treatment under the aforementioned heat treatment conditions, and the mass ($m_1$) is then measured. Using the measured and calculated masses, the decomposition percentage of the urea [%] is calculated according to the following (formula 1):

$$\text{Decomposition percentage of urea [\%]} = (m_0 - m_w - m_1) / m_u \times 100 \ldots \text{(Formula 1).}$$

$m_0$: Mass of chemical solution-impregnated pulp before heating
$m_w$: Amount of water added (water amount in system)
$m_1$: Mass of pulp after heating
$m_u$: Amount of urea added

When the phosphorus oxoacid introduction step is repeated multiple times, the aforementioned cellulose raw material (pulp) is replaced with the phosphorous acid esterified pulp subjected to the reaction multiple times, and the same calculation is then carried out.

In the method for producing cellulose fibers of the present invention, by controlling the decomposition percentage of the urea and/or the urea derivative in the phosphorus oxoacid group introduction step and then, by performing a defibration treatment, when the cellulose fibers are dispersed in a dispersion medium to obtain a dispersed solution, a highly transparent dispersed solution can be obtained. In addition, when a molded body such as, for example, a sheet, is formed using such a dispersion medium, a highly transparent sheet can be obtained. Moreover, the cellulose fibers of the present invention are prevented from yellowing, and thus, when a sheet is formed from a dispersion solution comprising the cellulose fibers, a sheet having a low YI value can be obtained.

The YI value of the phosphorus oxoacid group-introduced fibers (phosphorous acid esterified pulp) obtained in the aforementioned phosphorus oxoacid group introduction step is preferably 42.0 or less, more preferably 36.0 or less, further preferably 30.0 or less, and particularly preferably 24.0 or less. The YI value of the phosphorus oxoacid group-introduced fibers is a value measured in accordance with JIS K 7373. As a measurement device, for example, Colour Cute i, manufactured by Suga Test Instruments Co., Ltd. can be used.

< Washing step >

In the method for producing ultrafine cellulose fibers according to the present embodiment, a washing step may be performed on the phosphorus oxoacid group-introduced fibers, as necessary. The washing step is carried out by washing the phosphorus oxoacid group-introduced fibers, for example, with water or an organic solvent. In addition, the washing step may be performed after each step as described below, and the number of washing operations performed in each washing step is not particularly limited.

< Alkali treatment step >

When the ultrafine cellulose fibers are produced, an alkali treatment may be performed on the fiber raw material between the phosphorus oxoacid group introduction step and a defibration treatment step as described below. The method of the alkali treatment is not particularly limited. For example, a method of immersing the phosphorus oxoacid group-introduced fibers in an alkaline solution may be applied.

The alkali compound contained in the alkaline solution is not particularly limited, and it may be an inorganic alkaline compound or an organic alkali compound. In the present embodiment, because of high versatility, for example, sodium hydroxide or potassium hydroxide is preferably used as an alkaline compound. In addition, the solvent contained in the alkaline solution may be either water or an organic solvent. Among others, the solvent contained in the alkaline solution is preferably water, or a polar solvent including a polar organic solvent such as alcohol, and is more preferably an aqueous solvent containing at least water. As an alkaline solution, for example, a sodium hydroxide aqueous solution or a potassium hydroxide aqueous solution is preferable, because of high versatility.

The temperature of the alkali solution in the alkali treatment step is not particularly limited, and for example, it is preferably 5°C or higher and 80°C or lower, and more preferably 10°C or higher and 60°C or lower. The time for immersion of the phosphorus oxoacid group-introduced fibers in the alkali solution in the alkali treatment step is not particularly limited, and for example, it is preferably 5 minutes or more and 30 minutes or less, and more preferably 10 minutes or more

and 20 minutes or less. The amount of the alkali solution used in the alkali treatment is not particularly limited, and for example, it is preferably 100% by mass or more and 100000% by mass or less, and more preferably 1000% by mass and 10000% by mass or less, with respect to the absolute dry mass of the phosphorus oxoacid group-introduced fibers.

In order to reduce the amount of the alkaline solution used in the alkali treatment step, the phosphorus oxoacid group-introduced fibers may be washed with water or an organic solvent after the phosphorus oxoacid group introduction step and before the alkali treatment step. After the alkali treatment step and before the defibration step, the alkali-treated phosphorus oxoacid group-introduced fibers are preferably washed with water or an organic solvent, from the viewpoint of the improvement of the handling ability.

< Acid treatment step >

When ultrafine cellulose fibers are produced, an acid treatment may be performed on the phosphorus oxoacid group-introduced fibers between the step of introducing phosphorus oxoacid groups and the after-mentioned defibration treatment step. For example, a phosphorus oxoacid group introduction step, an acid treatment, an alkali treatment, and a defibration treatment may be performed in this order.

Such an acid treatment method is not particularly limited, and for example, a method of immersing the phosphorus oxoacid group-introduced fibers in an acid solution containing an acid may be applied. The concentration of the used acid solution is not particularly limited, and for example, it is preferably 10% by mass or less, and more preferably 5% by mass or less. In addition, the pH of the used acid solution is not particularly limited, and for example, it is preferably a pH value of 0 or more and 4 or less, and more preferably a pH value of 1 or more and 3 or less. Examples of the acid contained in the acid solution that can be used herein may include inorganic acid, sulfonic acid, and carboxylic acid. Examples of the inorganic acid may include sulfuric acid, nitric acid, hydrochloric acid, hydrobromic acid, hydroiodic acid, hypochlorous acid, chlorous acid, chloric acid, perchloric acid, phosphoric acid, and boric acid. Examples of the sulfonic acid may include methanesulfonic acid, ethanesulfonic acid, benzenesulfonic acid, p-toluenesulfonic acid, and trifluoromethanesulfonic acid. Examples of the carboxylic acid may include formic acid, acetic acid, citric acid, gluconic acid, lactic acid, oxalic acid, and tartaric acid. Among these acids, it is particularly preferable to use hydrochloric acid or sulfuric acid.

The temperature of the acid solution used in the acid treatment is not particularly limited, and for example, it is preferably 5°C or higher and 100°C or lower, and more preferably 20°C or higher and 90°C or lower. The time for immersion of the fiber raw material in the acid solution in the acid treatment is not particularly limited, and for example, it is preferably 5 minutes or more and 120 minutes or less, and more preferably 10 minutes or more and 60 minutes or less. The amount of the acid solution used in the acid treatment is not particularly limited, and for example, it is preferably 100% by mass or more and 100000% by mass or less, and more preferably 1000% by mass or more and 10000% by mass or less, with respect to the absolute dry mass of the phosphorus oxoacid group-introduced fibers.

< Defibration treatment step >

When cellulose fibers having a fiber width of 1000 nm or less are produced, the method for producing the cellulose fibers may include a defibration treatment step. The defibration treatment step is a step of performing a fibrillation treatment on a cellulose raw material having a phosphorus oxoacid group or a phosphorus oxoacid group-derived substituent, or a cellulose raw material having a phosphorous acid group or a phosphorous acid group-derived substituent, so as to obtain cellulose fibers having a fiber width of 1000 nm or less and having phosphorus oxoacid groups such as phosphorous acid groups. In the defibration treatment step, for example, a defibration treatment apparatus can be used. Such a defibration treatment apparatus is not particularly limited, and for example, a high-speed defibrator, a grinder (stone mill-type crusher), a high-pressure homogenizer, an ultrahigh-pressure homogenizer, a high-pressure collision-type crusher, a ball mill, a bead mill, a disc-type refiner, a conical refiner, a twin-screw kneader, an oscillation mill, a homomixer under high-speed rotation, an ultrasonic disperser, a beater or the like can be used. Among the above-described defibration treatment apparatuses, it is more preferable to use a high-speed defibrator, a high-pressure homogenizer, and an ultrahigh-pressure homogenizer, which are less affected by milling media, and are less likely to be contaminated.

In the defibration treatment step, for example, the fibers, into which phosphorus oxoacid groups such as phosphorous acid group have been introduced, are preferably diluted with a dispersion medium to prepare a slurry. As a dispersion medium, water, and one type or two or more types selected from organic solvents such as polar organic solvents can be used. The polar organic solvent is not particularly limited, and for example, alcohols, polyhydric alcohols, ketones, ethers, esters, aprotic polar solvents, etc. are preferable. Examples of the alcohols may include methanol, ethanol, isopropanol, n-butanol, and isobutyl alcohol. Examples of the polyhydric alcohols may include ethylene glycol, propylene glycol, and glycerin. Examples of the ketones may include acetone and methyl ethyl ketone (MEK). Examples of the ethers may include diethyl ether, tetrahydrofuran, ethylene glycol monomethyl ether, ethylene glycol monoethyl ether, ethylene glycol mono n-butyl ether, and propylene glycol monomethyl ether. Examples of the esters may include ethyl acetate and

butyl acetate. Examples of the aprotic polar solvents may include dimethyl sulfoxide (DMSO), dimethylformamide (DMF), dimethylacetamide (DMAc), and N-methyl-2-pyrrolidinone (NMP).

The solid concentration of the ultrafine cellulose fibers upon the defibration treatment can be determined, as appropriate. In addition, in a slurry obtained by dispersing the phosphorous acid group-introduced fibers in a dispersion medium, solids other than the phosphorus oxoacid group-introduced fibers, such as hydrogen-binding urea, may be comprised.

(Cellulose fiber-containing composition)

The present invention may also relate to a cellulose fiber-containing composition comprising the aforementioned cellulose fibers. In the present description, the cellulose fiber-containing composition may comprise a solvent as well as the aforementioned cellulose fibers. The type of the solvent is not particularly limited, and examples of the solvent may include water, an organic solvent, and a mixture of water and an organic solvent. Examples of the organic solvent may include alcohols, polyhydric alcohols, ketones, ethers, dimethyl sulfoxide (DMSO), dimethylformamide (DMF), and dimethylacetamide (DMAc). Examples of the alcohols may include methanol, ethanol, n-propanol, isopropanol, n-butanol, and t-butyl alcohol. Examples of the polyhydric alcohols may include ethylene glycol and glycerin. Examples of the ketones may include acetone and methyl ethyl ketone. Examples of the ethers may include diethyl ether, tetrahydrofuran, ethylene glycol monomethyl ether, ethylene glycol monoethyl ether, ethylene glycol mono-n-butyl ether, and ethylene glycol mono-t-butyl ether.

When the solvent is a main component of the cellulose fiber-containing composition, the cellulose fiber-containing composition may be a liquid composition. On the other hand, when the content of the solvent is low in the cellulose fiber-containing composition, the cellulose fiber-containing composition may be a solid composition. Besides, the solid composition includes a gel composition and a particulate composition.

When the cellulose fiber-containing composition is a liquid composition, the solid concentration in the liquid composition is preferably 0.1% by mass or more, more preferably 1% by mass or more, and further preferably 5% by mass or more, with respect to the total mass of the liquid composition. On the other hand, the solid concentration in the liquid composition is preferably 90% by mass or less, and more preferably 50% by mass or less, with respect to the total mass of the liquid composition. When the cellulose fiber-containing composition is a solid composition, the solid concentration in the solid composition is preferably 50% by mass or more, more preferably 80% by mass or more, and further preferably 90% by mass or more, with respect to the total mass of the solid composition. On the other hand, the solid concentration in the solid composition is preferably 99.9% by mass or less, and more preferably 95% by mass or less, with respect to the total mass of the solid composition.

When the cellulose fiber-containing composition is a liquid composition comprising water as a solvent, the total light transmittance of the liquid composition, in which the content of the cellulose fibers is set to be 0.2% by mass, is preferably 80% or more, more preferably 90% or more, further preferably 95% or more, and particularly preferably 98% or more. Herein, the total light transmittance of the liquid composition is a value measured in accordance with JIS K 7361. The total light transmittance of the liquid composition is measured using a hazemeter. In this measurement, a liquid glass cell having an optical path length of 1 cm is used. Besides, the zero point is measured with ion exchange water which is placed in the same glass cell. Before the measurement, the liquid composition is left at rest under the environment of 23°C and a relative humidity of 50% for 24 hours, so that the liquid temperature of the liquid composition is set to be 23°C. Besides, the transmittance of the liquid composition that is within the above-described range also means that the phosphorus oxoacid groups possessed by the cellulose fibers are not excessively condensed.

When the cellulose fiber-containing composition is a liquid composition comprising water as a solvent, the haze of the liquid composition is preferably 25% or less, more preferably 20% or less, further preferably 15% or less, still further preferably 10% or less, and particularly preferably 5% or less. The haze of the liquid composition may also be 0%. The haze value is a value obtained by diluting the cellulose fiber-containing composition with ion exchange water to 0.2% by mass, and then measuring it in accordance with JIS K 7136. A hazemeter is used in the measurement of the haze, and the dispersed solution is filled into a liquid glass cell having an optical path length of 1 cm. Besides, the zero point is measured with ion exchange water which is placed in the same glass cell.

When the content of the cellulose fibers in the liquid composition is set to be 0.4% by mass, the type B viscosity is preferably 5000 mPa·s or more, more preferably 8000 mPa·s or more, and further preferably 10000 mPa·s or more. The upper limit value of the viscosity of the liquid composition is not particularly limited, and it is preferably 100000 mPa·s. It is to be noted that the above-described viscosity is a value obtained by diluting the liquid composition to a solid concentration of 0.4% by mass, then stirring the diluted solution using a disperser at 1500 rpm for 5 minutes to sufficiently homogenize a slurry, then leaving the slurry at rest under the environment of 23°C and a relative humidity of 50% for 24 hours, and then measuring the viscosity using a type B viscometer. The measurement conditions are set to be conditions at 23°C, and the viscosity after the slurry has been rotated at 3 rpm for 3 minutes is measured. As a measuring device, the analog viscometer T-LVT manufactured by BROOKFIELD can be used.

When the cellulose fiber-containing composition is a liquid composition comprising a solvent, the cellulose fiber-containing composition may be a slurry obtained in the aforementioned defibration treatment step. Moreover, the slurry obtained in the defibration treatment step may be concentrated or dried, so as to obtain a gelatinous or solid cellulose fiber-containing material, and thereafter, the cellulose fiber-containing material may be re-dispersed in a solvent to obtain a cellulose fiber-containing composition (cellulose fiber-dispersed solution).

< Optical components >

The cellulose fiber-containing composition may further comprise optional components. Examples of such optional components may include antifoaming agents, lubricants, ultraviolet absorbing agents, dyes, pigments, stabilizers, surfactants, and antiseptics. Moreover, the cellulose fiber-containing composition may comprise, as optional components, hydrophilic polymers, hydrophilic low-molecular-weight substances, organic ions, and the like.

The hydrophilic polymer is preferably a hydrophilic oxygen-containing organic compound (provided that the above-described cellulose fibers are excluded). Examples of the oxygen-containing organic compound may include polyethylene glycol, polyethylene oxide, casein, dextrin, starch, modified starch, polyvinyl alcohol, modified polyvinyl alcohol (acetoacetylated polyvinyl alcohol, etc.), polyvinyl pyrrolidone, polyvinyl methyl ether, polyacrylates, acrylic acid alkyl ester copolymers, urethane copolymers, and cellulose derivatives (hydroxyethyl cellulose, carboxyethyl cellulose, carboxymethyl cellulose, etc.)

The hydrophilic low-molecular-weight substance is preferably a hydrophilic oxygen-containing organic compound, and more preferably polyhydric alcohol. Examples of the polyhydric alcohol may include glycerin, sorbitol, and ethylene glycol.

Examples of the organic ion include tetraalkylammonium ions and tetraalkylphosphonium ions. Examples of the tetraalkylammonium ions include a tetramethylammonium ion, a tetraethylammonium ion, a tetrapropylammonium ion, a tetrabutylammonium ion, a tetrapentylammonium ion, a tetrahexylammonium ion, a tetraheptylammonium ion, a tributylmethylammonium ion, a lauryltrimethylammonium ion, a cetyltrimethylammonium ion, a stearyltrimethylammonium ion, an octyldimethylethylammonium ion, a lauryldimethylethylammonium ion, a didecyldimethylammonium ion, a lauryldimethylbenzylammonium ion, and a tributylbenzylammonium ion. Examples of the tetraalkylphosphonium ions include a tetramethylphosphonium ion, a tetraethylphosphonium ion, a tetrapropylphosphonium ion, a tetrabutylphosphonium ion, and a lauryltrimethylphosphonium ion. In addition, tetrapropylonium ions and tetrabutylonium ions may include tetra-n-propylonium ions and tetra-n-butylonium ions, respectively.

(Molded body)

The present invention may also relate to a molded body formed from the aforementioned cellulose fibers or the aforementioned cellulose fiber-containing composition. In the present description, the molded body is a solid form that is molded to have a desired shape. Examples of the molded body may include a sheet, a bead, and a filament. Among others, the molded body is preferably a sheet, a bead, or a filament. When the molded body is a bead, the particle diameter of the bead is preferably 0.1 mm or more and 10 mm or less. When the molded body is a filament, the width of the filament is preferably 0.1 mm or more and 10 mm or less, and the length of the filament is preferably 1 mm or more and 10000 mm or less.

(Sheet)

In particular, the molded body is preferably a sheet, and the present invention may also relate to a sheet formed from the aforementioned cellulose fiber-containing composition. Herein, when the sheet is formed under the following Condition (a), the YI value of the sheet may be 6.0 or less, and it is preferably 4.5 or less, more preferably 3.0 or less, and further preferably 1.5 or less. The lower limit value of the YI value of the sheet is not particularly limited, and it may also be 0.0. The YI value of the sheet is a value measured in accordance with JIS K 7373. As a measurement device, for example, Colour Cute i, manufactured by Suga Test Instruments Co., Ltd. can be used.

Condition (a):

A cellulose fiber-dispersed solution having a solid concentration of 0.5% by mass is produced, and 20 parts by mass of a polyethylene oxide aqueous solution having a concentration of 0.5% by mass is added to 100 parts by mass of the cellulose fiber-dispersed solution to obtain a coating solution; and the coating solution is applied onto a base material to form a sheet having a basis weight of 50 g/m$^2$.

Upon the measurement of the YI value or the total light transmittance of a sheet, a sheet having a basis weight of 50 g/m$^2$ is used in various measurements. However, a case where the basis weight of the obtained sheet is not 50 g/m$^2$ is also assumed. In such a case, a step of re-dispersing the sheet in water to produce a sheet with a basis weight of 50 g/m$^2$ can be established before the measurement.

The thickness of the sheet of the present invention is not particularly limited, and for example, it is preferably 5 μm or more, more preferably 10 μm or more, and further preferably 20 μm or more. In addition, the upper limit value of the thickness of the sheet is not particularly limited, and it may be, for example, 1000 μm. The thickness of the sheet can be measured, for example, using a stylus thickness gauge (manufactured by Mahr; Millitron 1202 D).

The basis weight of the sheet is not particularly limited, and for example, it is preferably 10 $g/m^2$ or more, more preferably 20 $g/m^2$ or more, and further preferably 30 $g/m^2$ or more. On the other hand, the basis weight of the sheet is not particularly limited, and for example, it is preferably 200 $g/m^2$ or less, and more preferably 180 $g/m^2$ or less. Herein, the basis weight of the sheet can be calculated, for example, in accordance with JIS P 8124.

The density of the sheet is not particularly limited, and for example, it is preferably 0.1 $g/cm^3$ or more, more preferably 0.5 $g/cm^3$ or more, and further preferably 1.0 $g/cm^3$ or more. On the other hand, the density of the sheet is not particularly limited, and for example, it is preferably 5.0 $g/cm^3$ or less, and more preferably 3.0 $g/cm^3$ or less. Herein, the density of the sheet can be measured by subjecting a 50-mm square sheet to humidity conditioning under conditions of 23°C and a relative humidity of 50% for 24 hours, and then measuring the thickness and mass of the sheet.

The content of the cellulose fibers in the sheet is, for example, preferably 0.5% by mass or more, more preferably 1% by mass or more, further preferably 5% by mass or more, and particularly preferably 10% by mass or more, with respect to the total mass of the sheet. In addition, the upper limit value of the content of the cellulose fibers in the sheet is not particularly limited, and it may be 100% by mass, or 95% by mass, with respect to the total mass of the sheet.

The sheet may comprise optional components that can be comprised in the cellulose fiber-containing composition. In addition, the sheet may comprise water or an organic solvent.

(Method for producing sheet)

The method for producing an ultrafine cellulose fiber-containing sheet preferably comprises a coating step of applying a cellulose fiber-containing composition (hereinafter also referred to as a cellulose fiber-dispersed solution or a slurry) onto a base material, or a papermaking step of making paper from the slurry, as described below.

< Coating step >

In the coating step, for example, a cellulose fiber-containing composition (hereinafter also simply referred to as a "slurry") is applied onto a base material, and is then dried to form a sheet, which is then detached from the base material, so as to obtain a sheet. In addition, using a coating apparatus and a long base material, the sheets can be continuously produced.

The material of the base material used in the coating step is not particularly limited. A base material having higher wettability to the cellulose fiber-containing composition (slurry) is preferable because the shrinkage of the sheet or the like upon drying can be suppressed. It is preferable to select one from which a sheet formed after drying can be easily detached. Of these, a resin film or plate, or a metal film or plate is preferable, but is not particularly limited thereto. Examples of the base material that can be used herein may include: resin films or plates, such as those made of polypropylene, acryl, polyethylene terephthalate, vinyl chloride, polystyrene, polycarbonate, or polyvinylidene chloride; metal films or plates, such as those made of aluminum, zinc, copper, or iron; the aforementioned films or plates, the surfaces of which are subjected to an oxidation treatment; and stainless steel films or plates and brass films or plates.

When the slurry has a low viscosity and spreads on the base material in the coating step, a damming frame may be fixed and used on the base material in order to obtain a sheet having a predetermined thickness and basis weight. The damming frame is not particularly limited, and for example, it is preferable to select ones from which the edges of the sheet adhering thereto after drying can be easily detached. From such a viewpoint, frames molded from resin plates or metal plates are more preferable. In the present embodiment, examples of the frames that can be used herein may include: frames molded from resin plates, such as a polypropylene plate, an acryl plate, a polyethylene terephthalate plate, a vinyl chloride plate, a polystyrene plate, a polycarbonate plate, or a polyvinylidene chloride plate; frames molded from metal plates, such as an aluminum plate, a zinc plate, a copper plate, or an iron plate; the aforementioned frames, the surfaces of which are subjected to an oxidation treatment; and frames molded from stainless steel plates, brass plates, etc. A coater for applying the slurry onto the base material is not particularly limited, and examples of such a coater that can be used herein may include roll coaters, gravure coaters, die coaters, curtain coaters, and air doctor coaters. Among these, die coaters, curtain coaters, and spray coaters are particularly preferable because these coaters can provide more even thickness to the sheet.

The slurry temperature and the ambient temperature applied upon application of the slurry onto the base material are not particularly limited, and for example, the temperatures are preferably 5°C or higher and 80°C or lower, more preferably 10°C or higher and 60°C or lower, further preferably 15°C or higher and 50°C or lower, and particularly preferably 20°C or higher and 40°C or lower. When the coating temperature is equal to or higher than the above-described lower limit value, it is possible to easily apply the slurry onto the base material. When the coating temperature is equal to or

lower than the above-described upper limit value, it is possible to suppress volatilization of the dispersion medium during the coating.

In the coating step, it is preferable to apply the slurry onto the base material, so that the finished basis weight of the sheet becomes preferably 10 g/$m^2$ or more and 200 g/$m^2$ or less, and more preferably 20 g/$m^2$ or more and 180 g/$m^2$ or less. By applying the slurry so that the basis weight can be within the above-described range, a sheet having excellent strength can be obtained.

As described above, the coating step comprises a step of drying the slurry applied onto the base material. The step of drying the slurry is not particularly limited, and for example, a contactless drying method or a method of drying the sheet while locking the sheet, or a combination of these methods may be applied.

The contactless drying method is not particularly limited, and for example, a method for drying by heating with hot air, infrared radiation, far-infrared radiation, or near-infrared radiation (a drying method by heating) or a method for drying in vacuum (a vacuum drying method) can be applied. Although the drying method by heating and the vacuum drying method may be combined with each other, the drying method by heating is usually applied. The drying with infrared radiation, far-infrared radiation, or near-infrared radiation is not particularly limited, and for example, it can be performed using an infrared apparatus, a far-infrared apparatus, or a near-infrared apparatus.

The heating temperature applied in the drying method by heating is not particularly limited, and it is preferably 20°C or higher and 150°C or lower, and more preferably 25°C or higher and 105°C or lower. If the heating temperature is set to be equal to or higher than the above-described lower limit value, the dispersion medium can be rapidly volatilized. On the other hand, if the heating temperature is set to be equal to or lower than the above-described upper limit value, reduction in costs required for the heating and suppression of the thermal discoloration of the cellulose fibers can be realized.

< Papermaking step >

The papermaking step is carried out by making a paper from a slurry using a paper machine. The paper machine used in the papermaking step is not particularly limited, and examples thereof may include continuous paper machines such as a Fourdrinier paper machine, a cylinder paper machine, and an inclined paper machine, and a multilayer combination paper machine, which is a combination thereof. A known papermaking method, such as papermaking by hand, may be adopted in the papermaking step.

The papermaking step is carried out by subjecting the slurry to wire-filtration and dehydration to obtain a sheet that is in a wet state, and then pressing and drying this sheet. The filter fabric used in the filtration and dehydration of the slurry is not particularly limited, and for example, a filter fabric, through which cellulose fibers do not pass and the filtration speed is not excessively slow, is more preferable. Such filter fabric is not particularly limited, and for example, a sheet, a woven fabric, or a porous membrane, each consisting of an organic polymer, is preferable. Preferred examples of the organic polymer may include, but are not particularly limited to, non-cellulose organic polymers such as polyethylene terephthalate, polyethylene, polypropylene, and polytetrafluoroethylene (PTFE). In the present embodiment, examples of the filter fabric may include a polytetrafluoroethylene porous membrane having a pore size of 0.1 μm or more and 20 μm or less, and a woven fabric made of polyethylene terephthalate or polyethylene having a pore size of 0.1 μm or more and 20 μm or less.

In the sheet formation step, the method for producing a sheet from a slurry can be carried out, for example, using a production apparatus comprising a dewatering section for ejecting a slurry comprising cellulose fibers onto the upper surface of an endless belt and then dewatering a dispersion medium contained in the ejected slurry to form a web, and a drying section for drying the web to produce a sheet. The endless belt is provided across from the dewatering section to the drying section, and the web formed in the dewatering section is transferred to the drying section while being placed on the endless belt.

The dehydration method used in the papermaking step is not particularly limited, and for example, a dehydration method conventionally used for paper production may be applied. Among others, a method comprising performing dehydration using a Fourdrinier, cylinder, tilted wire, or the like and then performing dehydration using a roll press is preferable. In addition, the drying method used in the papermaking step is not particularly limited, and for example, a drying method used for paper production may be applied. Among others, a drying method using a cylinder dryer, a Yankee dryer, a hot air dryer, a near-infrared heater, or an infrared heater is more preferable.

(Intended use)

The cellulose fibers obtained by the production method of the present invention can be used as a thickener or a particle dispersion stabilizer. Moreover, the cellulose fibers obtained by the production method of the present invention can be mixed with a solvent to form a cellulose fiber-dispersed solution, or a sheet in which ultrafine cellulose fibers are dispersed can be formed from the slurry. Furthermore, the cellulose fibers of the present invention can be preferably used to be mixed with an organic solvent containing a resin component. By mixing the ultrafine cellulose fibers of the present

invention with an organic solvent containing a resin component, a resin composite, in which the ultrafine cellulose fibers are uniformly dispersed, can be formed. Likewise, a re-dispersed slurry of ultrafine cellulose fibers is used to form a film, and thus, can be used as various types of films.

Moreover, the cellulose fibers obtained by the production method of the present invention can be used, for example, as a reinforcing agent or an additive, in cements, paints, inks, lubricants, etc. Furthermore, the molded body obtained by applying the cellulose fibers onto the base material is also suitable for intended uses, such as reinforcing materials, interior materials, exterior materials, wrapping materials, electronic materials, optical materials, acoustic materials, processing materials, transport equipment components, electronic equipment components, and electrochemical element components.

Examples

The characteristics of the present invention will be more specifically described in the following examples and comparative examples. The materials, used amounts, ratios, treatment contents, treatment procedures, etc. described in the following examples can be appropriately modified, unless they are deviated from the claims of the present invention. Accordingly, the scope of the present invention should not be restrictively interpreted by the following specific examples.

< Production Example 1 >

The needle bleached kraft pulp manufactured by Oji Paper Co., Ltd. (solid content: 93% by mass; basis weight: 208 g/$m^2$, sheet-shaped; Canadian Standard Freeness (CSF) measured according to JIS P 8121 after defibration: 700 ml) was used as a raw material pulp.

A phosphorylation treatment was performed on this raw material pulp as follows. First, a mixed aqueous solution of phosphorous acid (phosphonic acid) and urea was added to 100 parts by mass (absolute dry mass) of the above raw material pulp, and the obtained mixture was adjusted to result in 33 parts by mass of the phosphorous acid (phosphonic acid), 120 parts by mass of the urea and 150 parts by mass of water, so as to obtain a chemical solution-impregnated pulp. Subsequently, the obtained chemical solution-impregnated pulp was heated with a hot air dryer at 165°C for 300 seconds, so that phosphorus oxoacid groups were introduced into cellulose in the pulp, thereby obtaining phosphorous oxoacid esterified pulp 1.

Subsequently, a washing treatment was performed on the obtained phosphorous oxoacid esterified pulp 1. The washing treatment was carried out by repeating the operation to pour 10 L of ion exchange water onto 100 g (absolute dry mass) of the phosphorous oxoacid esterified pulp 1 to obtain a pulp dispersed solution, which was then uniformly dispersed by stirring, followed by filtration and dehydration. The washing was terminated at a time point at which the electric conductivity of the filtrate became 100 μS/cm or less.

The above-described phosphorylation treatment and the above-described washing treatment were performed on the washed phosphorous oxoacid esterified pulp 1 in this order, twice for each treatment (the number of reactions: 3).

Subsequently, a neutralization treatment was performed on the phosphorous oxoacid esterified pulp 1 after the washing, as follows. First, the phosphorous oxoacid esterified pulp 1 after the washing was diluted with 10 L of ion exchange water, and then, while stirring, a 1 N sodium hydroxide aqueous solution was slowly added to the diluted solution to obtain phosphorous oxoacid esterified pulp slurry 1 having a pH value of 12 or more and 13 or less. Thereafter, the phosphorous oxoacid esterified pulp slurry 1 was dehydrated, so as to obtain a neutralized phosphorous oxoacid esterified pulp 1. Subsequently, the above-described washing treatment was performed on the phosphorous acid esterified pulp 1 after the neutralization treatment.

The infrared absorption spectrum of the thus obtained phosphorous oxoacid esterified pulp 1 was measured by FT-IR. As a result, absorption based on phosphonic acid groups as tautomers of phosphorous acid groups, P = O, was observed around 1210 $cm^{-1}$, and thus, addition of the phosphorous acid groups (phosphonic acid groups) to the pulp was confirmed.

Moreover, the obtained phosphorous oxoacid esterified pulp 1 was analyzed using an X-ray diffractometer. As a result, it was confirmed that there were typical peaks at two positions near $2\theta$ = 14° or more and 17° or less, and near $2\theta$ = 22° or more and 23° or less. Thus, the phosphorous oxoacid esterified pulp 1 was confirmed to have cellulose type I crystals.

Ion exchange water was added to the obtained phosphorous oxoacid esterified pulp 1, so as to prepare a slurry having a solid concentration of 0.3% by mass. This slurry was treated using a high-pressure homogenizer (manufactured by Biryu Co., Ltd., BERYU MINI) under conditions of a pressure of 150 MPa three times, so as to obtain an ultrafine cellulose fiber-dispersed solution comprising ultrafine cellulose fibers.

It was confirmed according to X-ray diffraction that these ultrafine cellulose fibers maintained cellulose type I crystals. Moreover, the fiber width of the ultrafine cellulose fibers was measured using a transmission electron microscope. As a result, ultrafine cellulose fibers having a fiber width of 3 to 5 nm were observed.

The phosphorous oxoacid esterified pulps obtained in all of the following production examples excluding Production Example 4 were also measured by FT-IR, in terms of the infrared absorption spectrum. As a result, absorption based on phosphonic acid groups as tautomers of phosphorous acid groups, P = O, was observed around 1210 $cm^{-1}$, and thus, addition of the phosphorous acid groups (phosphonic acid groups) to the phosphorous oxoacid esterified pulps was confirmed. Moreover, the phosphorous oxoacid esterified pulps were analyzed using an X-ray diffractometer. As a result, it was confirmed that there were typical peaks at two positions near $2\theta$ = 14° or more and 17° or less, and near $2\theta$ = 22° or more and 23° or less. Thus, the phosphorous oxoacid esterified pulps were confirmed to have cellulose type I crystals.

The phosphorous oxoacid esterified pulp obtained in Production Example 4 was measured by FT-IR, in terms of the infrared absorption spectrum. As a result, absorption based on phosphonic acid groups as tautomers of phosphorous acid groups, P = O, was observed around 1210 $cm^{-1}$, and absorption based on phosphoric acid groups, P = O, was observed around 1230 $cm^{-1}$. Thus, addition of the phosphorous acid groups (phosphonic acid groups) and the phosphoric acid groups to the pulp was confirmed. Moreover, the phosphorous oxoacid esterified pulp obtained in Production Example 4 was analyzed using an X-ray diffractometer. As a result, it was confirmed that there were typical peaks at two positions near $2\theta$ = 14° or more and 17° or less, and near $2\theta$ = 22° or more and 23° or less. Thus, the phosphorous oxoacid esterified pulp was confirmed to have cellulose type I crystals.

Furthermore, it was confirmed according to X-ray diffraction that the ultrafine cellulose fiber-dispersed solutions obtained in all of the following production examples maintained cellulose type I crystals. Further, the fiber width of the ultrafine cellulose fibers was measured using a transmission electron microscope. As a result, ultrafine cellulose fibers having a fiber width of 3 to 5 nm were observed.

< Production Examples 2 and 3 >

An ultrafine cellulose fiber-dispersed solution comprising ultrafine cellulose fibers was obtained in the same manner as that of Production Example 1, with the exception that the heating time for heating with a hot air dryer in the phosphorylation treatment was set to be 450 seconds (Production Example 2) and 600 seconds (Production Example 3).

< Production Example 4 >

An ultrafine cellulose fiber-dispersed solution comprising ultrafine cellulose fibers was obtained in the same manner as that of Production Example 1, with the exceptions that 28 parts by mass of phosphoric acid and 8 parts by mass of phosphorous acid (phosphonic acid) were used instead of 33 parts by mass of phosphorous acid (phosphonic acid), that the heating time for heating with a hot air dryer in the phosphorylation treatment was set to be 450 seconds, and that the number of repeating phosphorylation treatments was set to be 1 (the number of reactions: 2).

< Production Examples 5 and 6 >

An ultrafine cellulose fiber-dispersed solution comprising ultrafine cellulose fibers was obtained in the same manner as that of Production Example 1, with the exceptions that the heating time for heating with a hot air dryer in the phosphorylation treatment was set to be 450 seconds (Production Example 5) and 600 seconds (Production Example 6), and that the number of repeating phosphorylation treatments was set to be 1 (the number of reactions: 2).

< Production Example 7 >

An ultrafine cellulose fiber-dispersed solution comprising ultrafine cellulose fibers was obtained in the same manner as that of Production Example 4, with the exceptions that the heating time for heating with a hot air dryer in the phosphorylation treatment was set to be 900 seconds, and that the phosphorylation treatment was not repeated (the number of reactions: 1).

< Production Examples 8 to 10 >

An ultrafine cellulose fiber-dispersed solution comprising ultrafine cellulose fibers was obtained in the same manner as that of Production Example 1, with the exceptions that the heating time for heating with a hot air dryer in the phosphorylation treatment was set to be 900 seconds (Production Example 8), 1350 seconds (Production Example 9), and 1800 seconds (Production Example 10), and that the phosphorylation treatment was not repeated (the number of reactions: 1).

[Measurements and evaluation]

The phosphorous oxoacid esterified pulps of Production Example 1 to 10, which were obtained after the phosphorylation treatment step or the washing step, were measured according to the after-mentioned evaluation methods, in terms of the decomposition percentage of urea, YI value, and polymerization degree. Moreover, the ultrafine cellulose fiber-dispersed solutions obtained in Production Example 1 to 10 were measured according to the after-mentioned methods, in terms of haze and total light transmittance. Furthermore, ultrafine cellulose fiber-containing sheets were produced according to the after-mentioned methods, and the YI values thereof were then measured.

< Calculation of decomposition percentage of urea >

The decomposition percentage of urea in the phosphorylation treatment of each of Production Examples 1 to 10 was calculated according to the following method. Herein, the decomposition percentage of urea is a value obtained by dividing a reduction in the mass other than water evaporation (i.e., the amount of urea decomposed) in the phosphorus oxoacid introduction step by the mass of the urea added to the cellulose raw material, and then expressing the obtained value with a mass fraction. This value was measured by the following method.

First, the absolute dry mass of a cellulose raw material (pulp) used in the test was measured. Subsequently, a predetermined amount of chemical solution was added to the cellulose raw material (pulp), and the mass ($m_0$) was then measured. From the composition of the chemical solution and the initial water content rate of the pulp, the amount of water added (the water amount in the system) ($m_w$) and the amount of urea added ($m_u$) were calculated. Thereafter, the impregnated cellulose raw material (pulp) was subjected to a heat treatment under the aforementioned heat treatment conditions, and the mass ($m_1$) was then measured. Using the measured and calculated masses, the decomposition percentage of the urea [%] was calculated according to the following (formula 1):

$$\text{Decomposition percentage of urea [\%]} = (m_0 - m_w - m_1) / m_u \times 100 \ldots \text{(Formula 1)}.$$

$m_0$: Mass of chemical solution-impregnated pulp before heating
$m_w$: Amount of water added (water amount in system)
$m_1$: Mass of pulp after heating
$m_u$: Amount of urea added

When the phosphorus oxoacid introduction step is repeated multiple times, the aforementioned cellulose raw material (pulp) was replaced with the phosphorous oxoacid esterified pulp subjected to the reaction multiple times, and the same calculation was then carried out.

< YI value of phosphorous oxoacid esterified pulps >

With regard to the phosphorous oxoacid esterified pulps immediately after the heating in the phosphorylation treatment step (before the washing step) in Production Examples 1 to 10, the YI value of each phosphorous oxoacid esterified pulp was measured in accordance with JIS K 7373, using Colour Cute I (manufactured by Suga Test Instruments Co., Ltd.). Besides, when the phosphorylation reaction was carried out multiple times, the phosphorous oxoacid esterified pulp immediately after the heating in the final phosphorylation reaction (before the washing step) was subjected to the measurement of the YI value.

< Measurement of specific viscosity and polymerization degree of phosphorous oxoacid esterified pulps >

The phosphorous oxoacid esterified pulps obtained in the washing step of each of Production Examples 1 to 10 were measured in accordance with Tappi T230, in terms of the specific viscosity and polymerization degree of the cellulose fibers.
Specifically, the ultrafine cellulose fibers as measurement targets were dispersed in a dispersion medium, the viscosity thereof was then measured (defined as $\eta 1$), and the blank viscosity was then measured using only the dispersion medium (defined as $\eta 0$). Thereafter, a specific viscosity ($\eta sp$) and an intrinsic viscosity ($[\eta]$) were calculated according to the following equations.

$$\eta sp = (\eta 1 / \eta 0) - 1$$

$$[\eta] = \eta sp / (c(1 + 0.28 \times \eta sp))$$

In the above equation, c indicates the concentration of the cellulose fibers upon the measurement of the viscosity.
Further, the polymerization degree (DP) of the cellulose fibers was calculated according to the following equation.

$$DP = 1.75 \times [\eta].$$

Since this polymerization degree is an average polymerization degree measured according to a viscosity method, it is also referred to as a "viscosity average polymerization degree" in some cases.

< Measurement of first amount of dissociated acid and total amount of dissociated acid (phosphorus oxoacid groups) >

The amount of phosphorus oxoacid groups in the ultrafine cellulose fibers was measured by treating with an ion exchange resin, a cellulose fiber-containing slurry prepared by diluting an ultrafine cellulose fiber-dispersed solution comprising the ultrafine cellulose fibers with ion exchange water to result in a content of 0.2% by mass, and then performing titration using alkali.
In the treatment with the ion exchange resin, 1/10 by volume of a strongly acidic ion exchange resin (Amberjet 1024; manufactured by Organo Corporation; conditioned) was added to the aforementioned cellulose fiber-containing slurry, and the resultant mixture was shaken for 1 hour. Then, the mixture was poured onto a mesh having 90-μm apertures to separate the resin from the slurry.
In the titration using alkali, a change in the pH value shown by the cellulose fiber-containing slurry after the treatment with the ion exchange resin the slurry was measured, while adding an aqueous solution of 0.1 N sodium hydroxide. According to this neutralization titration, in a curve formed by plotting pH values measured with respect to the amount of alkali added, two points are confirmed, in which an increment (a derivative of pH with respect to the amount of alkali added dropwise) becomes maximum. Regarding these two points, a maximum point of an increment firstly obtained after addition of alkali is referred to as a first end point, whereas a maximum point of an increment subsequently obtained after addition of alkali is referred to as a second end point (Figure 1). The amount of alkali required from initiation of the titration until the first end point becomes equal to the first amount of dissociated acid in the slurry used in the titration. In addition, the amount of alkali required from initiation of the titration until the second end point becomes equal to the total amount of dissociated acid in the slurry used in the titration. Besides, the value obtained by dividing the amount of alkali required from initiation of the titration until the first end point by a solid content (g) in the slurry to be titrated was defined to be the first amount of dissociated acid (mmol/g). In addition, the value obtained by dividing the amount of alkali required from initiation of the titration until the second end point by a solid content (g) in the slurry to be titrated was defined to be the total amount of dissociated acid (mmol/g).
Besides, the phosphorous oxoacid esterified pulps obtained in Production Examples 1 to 10 were also measured in terms of the first amount of dissociated acid and the total amount of dissociated acid. Specifically, 100 parts by mass (absolute dry mass) of the phosphorous oxoacid esterified pulp obtained in each of Production Examples 1 to 10 was diluted with ion exchange water to a content of 2% by mass, and then, while stirring, 1000 parts by mass of a 1 N hydrochloric acid aqueous solution was slowly added thereto. Subsequently, this pulp suspension was stirred for 15 minutes and was then dehydrated to obtain a dehydrated sheet, which was then diluted with ion exchange water again, and 1000 parts by mass of a 1 N hydrochloric acid aqueous solution was added to 100 parts by mass (absolute dry mass) of the phosphorous oxoacid esterified pulp. By repeating this operation five times, the phosphorus oxoacid groups comprised in the phosphorous oxoacid esterified pulp were completely converted to acid-type phosphorus oxoacid groups. Moreover, the operation of uniformly dispersing this pulp suspension by stirring and then subjecting it to filtration and dehydration to obtain a dehydrated sheet was repeated, so that redundant hydrochloric acid was fully washed away. The obtained acid-type phosphorous oxoacid esterified pulp was diluted with ion exchange water to a content of 0.2% by mass, so as to produce a phosphorous oxoacid esterified pulp suspension. The phosphorous oxoacid esterified pulp suspension was mechanically treated using a high-speed rotary defibration machine (manufactured by M Technique Co., Ltd., CLEARMIX-2.2S) at 21500 rpm for 5 minutes. The thus obtained suspension was subjected to titration using alkali in the same manner as that of the aforementioned method.

< Measurement of haze of ultrafine cellulose fiber-dispersed solution >

The haze of the ultrafine cellulose fiber-dispersed solution was measured by diluting the ultrafine cellulose fiber-dispersed solution with ion exchange water to a solid concentration of 0.2% by mass, and then measuring it with a hazemeter (manufactured by MURAKAMI COLOR RESEARCH LABORATORY Co., Ltd.; HM-150) in accordance with

JIS K 7136, using a liquid glass cell having an optical path length of 1 cm (manufactured by Fujiwara Scientific Company Co., Ltd., MG-40, inverse optical path). Besides, the zero point was measured with ion exchange water which was placed in the same glass cell. The dispersed solution as a measurement target was left at rest under the environment of 23°C and a relative humidity of 50% for 24 hours, before the measurement. The liquid temperature of the dispersed solution upon the measurement was 23°C.

< Measurement of total light transmittance of ultrafine cellulose fiber-dispersed solution>

The total light transmittance of the ultrafine cellulose fiber-dispersed solution was measured by diluting the ultrafine cellulose fiber-dispersed solution after completion of the mechanical treatment step (defibration treatment step) with ion exchange water to a solid concentration of 0.2% by mass, and then measuring it with a hazemeter (manufactured by MURAKAMI COLOR RESEARCH LABORATORY Co., Ltd.; HM-150) in accordance with JIS K 7361, using a liquid glass cell having an optical path length of 1 cm (manufactured by Fujiwara Scientific Company Co., Ltd., MG-40, inverse optical path). Besides, the zero point was measured with ion exchange water which was placed in the same glass cell. The dispersed solution as a measurement target was left at rest under the environment of 23°C and a relative humidity of 50% for 24 hours, before the measurement. The liquid temperature of the dispersed solution upon the measurement was 23°C.

< Measurement of YI value of ultrafine cellulose fiber-dispersed solution-containing sheet >

Ion exchange water was added to the ultrafine cellulose fiber-dispersed solution obtained in each of Production Examples 1 to 10 to result in a solid concentration of 0.5% by mass, so as to adjust the concentration. Subsequently, 20 parts by mass of an aqueous solution containing 0.5% by mass of polyethylene oxide (manufactured by SUMITOMO SEIKA CHEMICALS CO., LTD.; PEO-18) was added to 100 parts by mass of the ultrafine cellulose fiber-dispersed solution after completion of the concentration adjustment, thereby obtaining a coating solution. Subsequently, the coating solution was weighed such that the finished basis weight of the obtained sheet (a layer constituted with the solid content of the above-described coating solution) became 50 g/$m^2$, and was then applied onto a commercially available acrylic plate, and thereafter, the acrylic plate was dried in a constant-temperature dryer at 50°C. In order to obtain the predetermined basis weight, a damming metal frame (a metal frame having an inside dimension of 180 mm x 180 mm, and a height of 5 cm) was arranged on the acrylic plate. Subsequently, the dried sheet was peeled from the above-described acrylic plate to obtain an ultrafine cellulose fiber-containing sheet. Thereafter, the YI value of the obtained ultrafine cellulose fiber-containing sheet was measured in accordance with JIS K 7373, using Colour Cute i (manufactured by Suga Test Instruments Co., Ltd.).

[Table 1]

| | | | Example | | | | | | Comparative Example | | | |
|---|---|---|---|---|---|---|---|---|---|---|---|---|
| | | | Production Ex. 1 | Production Ex. 2 | Production Ex. 3 | Production Ex. 4 | Production Ex. 5 | Production Ex. 6 | Production Ex. 7 | Production Ex. 8 | Production Ex. 9 | Production Ex. 10 |
| Production step | Number of reactions | number | 3 | | | 2 | | | 1 | | | |
| | Total heating time | sec | 900 | 1350 | 1800 | 900 | 900 | 1200 | 900 | 900 | 1350 | 1800 |
| | Heating time in 1 cycle step | sec | 300 | 450 | 600 | 450 | 450 | 600 | 900 | 900 | 1350 | 1800 |
| | Urea decomposition % in each step | % | 52/56/59 | 70172174 | 89/90/93 | 68/72 | 90/90 | 91/90 | 96 | 97 | 100 | 100 |
| Cellulose fibers (before fibrillation) | First amount of dissociated acid A1' | mmol/g | 2.39 | 2.62 | 2.46 | 2.33 | 2.22 | 2.06 | 2.17 | 1.19 | 1.04 | Unmeasurable due to significant deterioration of cellulose |
| | Second amount of dissociated acid | mmol/g | 0.24 | 0.30 | 0.26 | 1.25 | 0.24 | 0.21 | 1.15 | 0.19 | 0.21 | Unmeasurable due to significant deterioration of cellulose |
| | Total amount of dissociated acid A2' | mmol/g | 2.63 | 2.92 | 2.73 | 3.58 | 2.45 | 2.27 | 3.32 | 1.38 | 1.25 | Unmeasurable due to significant deterioration of cellulose |
| | A1'/A2' | mmol/g | 0.91 | 0.90 | 0.90 | 0.65 | 0.90 | 0.91 | 0.65 | 0.86 | 0.83 | Unmeasurable due to significant deterioration of cellulose |
| | Polymerization degree | | 761 | 631 | 559 | 677 | 652 | 567 | 475 | 452 | 251 | Unmeasurable due to significant deterioration of cellulose |
| | YI value of phosphorous acid esterified pulp obtained in phosphorous acid esterification step | | 20.98 | 20.19 | 18.16 | 20.55 | 21.55 | 22.46 | 42.33 | 46.48 | 44.74 | 40.24 |
| | First amount of dissociated acid A1 | mmol/g | 2.39 | 2.62 | 2.46 | 2.33 | 2.22 | 2.06 | 2.17 | 1.19 | 1.04 | Unmeasurable due to significant deterioration of cellulose |

(continued)

| | | | Example | | | | | | Comparative Example | | | |
|---|---|---|---|---|---|---|---|---|---|---|---|---|
| | | | Production Ex. 1 | Production Ex. 2 | Production Ex. 3 | Production Ex. 4 | Production Ex. 5 | Production Ex. 6 | Production Ex. 7 | Production Ex. 8 | Production Ex. 9 | Production Ex. 10 |
| Cellulose fibers (after fibrillation) | Second amount of dissociated acid | mmol/g | 0.24 | 0.30 | 026 | 1.25 | 0.24 | 021 | 1.15 | 0.19 | 0.21 | Unmeasurable due to significant deterioration of cellulose |
| | Total amount of dissociated acid A2 | mmol/g | 2.63 | 2.92 | 2.73 | 3.58 | 2.45 | 2.27 | 3.32 | 1.38 | 1.25 | Unmeasurable due to significant deterioration of cellulose |
| | A1/A2 | mmol/g | 0.91 | 0.90 | 0.90 | 0.65 | 0.90 | 0.91 | 0.65 | 0.86 | 0.83 | Unmeasurable due to significant deterioration of cellulose |
| | Haze of dispersed solution | % | 0.9 | 0.4 | 0.2 | 16.6 | 0.9 | 0.4 | 26.8 | 0.7 | 35.7 | Unmeasurable due to significant deterioration of cellulose |
| | Total light transmittance of dispersed solution | % | 99.6 | 100 | 100 | 84 | 100 | 100 | 73.7 | 97.6 | 73.1 | Unmeasurable due to significant deterioration of cellulose |
| | YI value of ultrafine cellulose fiber-containing sheet | | 0.72 | 0.68 | 0.59 | 0.72 | 0.78 | 1.25 | 6.49 | 7.08 | 16.05 | Unmeasurable due to significant deterioration of cellulose |

The dispersed solutions comprising the ultrafine cellulose fibers obtained in Production Examples 1 to 6 had high transparency. Also, in the sheets formed from the ultrafine cellulose fibers obtained in Production Examples 1 to 6, yellowing was suppressed. As such, it was found that the ultrafine cellulose fibers obtained in Production Examples 1 to 6 are capable of improving the transparency of an ultrafine cellulose fiber-containing composition, while suppressing the yellowing of the composition.

## Claims

**1.** A method for producing cellulose fibers, comprising:

mixing a compound having a phosphorous acid group and/or a salt thereof and urea and/or a urea derivative into a cellulose raw material to obtain a cellulose raw material having a phosphorous acid group or a phosphorous acid group-derived substituent,
wherein

the step of obtaining the cellulose raw material having a phosphorous acid group or a phosphorous acid group-derived substituent includes a plurality of single cycle steps, wherein, in the single cycle step, the compound having a phosphorous acid group and/or the salt thereof and the urea and/or the urea derivative are mixed into the cellulose raw material, and the obtained mixture is then heated, and
the decomposition percentage of the urea and/or the urea derivative in the single cycle step is 95% or less measured as described according to the description.

**2.** The method according to claim 1, wherein
the heat treatment time in each single cycle step is 1 second or more and 5000 seconds or less, wherein preferably the heat treatment time in each single cycle step is 100 seconds or more and 900 seconds or less.

**3.** The method according to claim 1, wherein
the molar mass of the phosphorous atoms contained in the compound having a phosphorous acid group and/or a salt thereof is defined as P and the molar mass of the urea and/or the urea derivative is defined as N, the value of N/P is 3.5 or more and 50 or less.

**4.** Cellulose fibers obtainable by the method according to any one of claims 1 to 3 having a fiber width of 1000 nm or less measured as described according to the description and having a phosphorous acid group or a phosphorous acid group-derived substituent, wherein

the amount of the phosphorous acid group or the phosphorous acid group-derived substituent introduced is 1.35 mmol/g or more as measured by a neutralization titration method, and
when a sheet is formed under the following Condition (a), the YI value of the sheet is 6.0 or less:
Condition (a):
a cellulose fiber-dispersed solution having a solid concentration of 0.5% by mass is produced, and 20 parts by mass of a polyethylene oxide aqueous solution having a concentration of 0.5% by mass is added to 100 parts by mass of the cellulose fiber-dispersed solution to obtain a coating solution; and the coating solution is applied onto a base material to form a sheet having a basis weight of 50 $g/m^2$.

**5.** The cellulose fibers according to claim 4, wherein when a sheet is formed under the Condition (a), the YI value of the sheet is 3.0 or less.

**6.** The cellulose fibers according to claims 4 or 5, wherein when a sheet is formed under the Condition (a), the YI value of the sheet is 1.5 or less.

**7.** A cellulose fiber-containing composition comprising the cellulose fibers according to any one of claims 4 to 6.

**8.** The cellulose fiber-containing composition according to claim 7, comprising a solvent.

**9.** The cellulose fiber-containing composition according to claim 8, wherein the solvent is water, and when the solid concentration is set to be 0.2% by mass, the total light transmittance is 80% or more, wherein total light transmittance of the liquid composition is a value measured in accordance with JIS K 7361.

10. The cellulose fiber-containing composition according to claim 7, wherein the polymerization degree of the cellulose fibers before fibrillation is 500 or more as calculated from the viscosity of a pulp measured in accordance with Tappi T230.

11. A molded body formed from the cellulose fibers according to any one of claims 4 to 6 or the cellulose fiber-containing composition according to any one of claims 7 to 10.

12. The molded body according to claim 11, which is a sheet.

**Patentansprüche**

1. Verfahren zur Herstellung von Cellulosefasern, umfassend:

   das Mischen einer Verbindung, die eine Phosphorigsäuregruppe und/oder deren Salz und Harnstoff und/oder ein Harnstoffderivat aufweist, mit einem Cellulose-Rohmaterial, um ein Cellulose-Rohmaterial mit einer Phosphorigsäuregruppe oder einem von einer Phosphorigsäuregruppe abgeleiteten Substituenten zu erhalten, wobei der Schritt zur Gewinnung des Cellulose-Rohmaterials, das eine Phosphorigsäuregruppe oder einen von einer Phosphorigsäuregruppe abgeleiteten Substituenten aufweist, mehrere Einzelzyklus-Schritte umfasst, wobei in dem Einzelzyklus-Schritt die Verbindung, die eine Phosphorigsäuregruppe und/oder deren Salz aufweist, und der Harnstoff und/oder das Harnstoffderivat mit dem Cellulose-Rohmaterial vermischt werden und die erhaltene Mischung dann erhitzt wird, und
   der Zersetzungsgrad des Harnstoffs und/oder des Harnstoffderivats im Einzelzyklus-Schritt 95% oder weniger beträgt, gemessen gemäß der Beschreibung.

2. Verfahren nach Anspruch 1, wobei
   die Wärmebehandlungszeit in jedem Einzelzyklus-Schritt 1 Sekunde oder mehr und 5000 Sekunden oder weniger beträgt, wobei die Wärmebehandlungszeit in jedem Einzelzyklus-Schritt vorzugsweise 100 Sekunden oder mehr und 900 Sekunden oder weniger beträgt.

3. Verfahren nach Anspruch 1, wobei
   die Molmasse der Phosphoratome, die in der Verbindung mit einer Phosphorigsäuregruppe und/oder deren Salz enthalten sind, als P definiert ist und die Molmasse des Harnstoffs und/oder des Harnstoffderivats als N definiert ist, wobei der Wert von N/P 3,5 oder mehr und 50 oder weniger beträgt.

4. Cellulosefasern, erhältlich nach dem Verfahren nach einem der Ansprüche 1 bis 3, mit einer Faserbreite von 1000 nm oder weniger, gemessen gemäß der Beschreibung, und mit einer Phosphorigsäuregruppe oder einem von einer Phosphorigsäuregruppe abgeleiteten Substituenten, wobei

   die Menge der eingeführten Phosphorigsäuregruppe oder des von einer Phosphorigsäuregruppe abgeleiteten Substituenten 1,35 mmol/g oder mehr beträgt, gemessen durch Neutralisationstitrationsverfahren, und
   wenn eine Folie unter der folgenden Bedingung (a) gebildet wird, der YI-Wert der Folie 6,0 oder weniger beträgt:
   Bedingung (a):
   eine dispergierte Cellulosefaserlösung mit einer Feststoffkonzentration von 0,5 Massenprozent wird hergestellt, und 20 Massenteile einer Polyethylenoxid-Wasserlösung mit einer Konzentration von 0,5 Massenprozent werden zu 100 Massenteilen der dispergierten Cellulosefaserlösung gegeben, um eine Beschichtungslösung zu erhalten; und die Beschichtungslösung wird auf ein Basismaterial aufgetragen, um eine Folie mit einem Basisgewicht von 50g/$m^2$ zu bilden.

5. Cellulosefasern nach Anspruch 4, wobei der YI-Wert der unter Bedingung (a) gebildeten Folie 3,0 oder weniger beträgt.

6. Cellulosefasern nach Anspruch 4 oder 5, wobei der YI-Wert der unter Bedingung (a) gebildeten Folie 1,5 oder weniger beträgt.

7. Cellulosefaser-haltige Mischung, die die Cellulosefasern nach einem der Ansprüche 4 bis 6 enthält.

8. Cellulosefaser-haltige Mischung nach Anspruch 7, die ein Lösungsmittel umfasst.

9. Cellulosefaser-haltige Mischung nach Anspruch 8, wobei das Lösungsmittel Wasser ist und die Gesamtlichtdurchlässigkeit bei einer Feststoffkonzentration von 0,2 Massenprozent 80% oder mehr beträgt, wobei die Gesamtlichtdurchlässigkeit der flüssigen Mischung ein nach JIS K 7361 gemessener Wert ist.

10. Cellulosefaser-haltige Mischung nach Anspruch 7, wobei der Polymerisationsgrad der Cellulosefasern vor der Fibrillierung 500 oder mehr beträgt, berechnet aus der Viskosität eines gemäß Tappi T230 gemessenen Zellstoffs.

11. Formkörper, der aus den Cellulosefasern nach einem der Ansprüche 4 bis 6 oder der cellulosefaser-haltigen Mischung nach einem der Ansprüche 7 bis 10 gebildet ist.

12. Formkörper nach Anspruch 11, der eine Folie ist.

**Revendications**

1. Procédé de production de fibres de cellulose, comprenant :

   le mélange d'un composé ayant un groupe acide phosphorique et/ou un sel de celui-ci et d'urée et/ou d'un dérivé d'urée dans une matière première cellulosique pour obtenir une matière première cellulosique ayant un groupe acide phosphorique ou un substituant dérivé d'un groupe acide phosphorique, dans lequel
   l'étape d'obtention de la matière première cellulosique ayant un groupe acide phosphorique ou un substituant dérivé d'un groupe acide phosphorique comprend une pluralité d'étapes à cycle unique, dans lesquelles, dans l'étape à cycle unique, le composé ayant un groupe acide phosphorique et/ou son sel et l'urée et/ou le dérivé d'urée sont mélangés à la matière première cellulosique, puis le mélange obtenu est chauffé, et
   le pourcentage de décomposition de l'urée et/ou du dérivé d'urée dans l'étape à cycle unique est de 95 % ou moins, mesuré comme décrit dans la description.

2. Procédé selon la revendication 1, dans lequel
   la durée du traitement thermique dans chaque étape de cycle unique est de 1 seconde ou plus et de 5000 secondes ou moins, de préférence la durée du traitement thermique dans chaque étape d'un cycle unique est de 100 secondes ou plus et de 900 secondes ou moins.

3. Procédé selon la revendication 1, dans lequel
   la masse molaire des atomes de phosphore contenus dans le composé ayant un groupe acide phosphoreux et/ou un sel de celui-ci est définie comme P et la masse molaire de l'urée et/ou du dérivé d'urée est définie comme N, la valeur de N/P est de 3,5 ou plus et de 50 ou moins.

4. Fibres de cellulose obtenues par le procédé selon l'une quelconque des revendications 1 à 3, ayant une largeur de fibre de 1000 nm ou moins, mesurée comme décrit dans la description, et ayant un groupe acide phosphorique ou un substituant dérivé d'un groupe acide phosphorique, dans lesquelles

   la quantité du groupe acide phosphorique ou du substituant dérivé du groupe acide phosphorique introduite est de 1,35 mmol/g ou plus, telle que mesurée par une méthode de titrage par neutralisation, et
   lorsqu'une feuille est formée dans les conditions suivantes (a), la valeur YI de la feuille est de 6,0 ou moins :
   Condition (a) :
   une solution dispersée de fibres de cellulose ayant une concentration en solides de 0,5 % en masse est produite, et 20 parties en masse d'une solution aqueuse de polyéthylène oxyde ayant une concentration de 0,5 % en masse sont ajoutées à 100 parties en masse de la solution dispersée de fibres de cellulose pour obtenir une solution de revêtement ; et la solution de revêtement est appliquée sur un matériau de base pour former une feuille ayant un grammage de 50 g/m$^2$.

5. Les fibres de cellulose selon la revendication 4, dans lesquelles, lorsqu'une feuille est formée dans les conditions (a), la valeur YI de la feuille est de 3,0 ou moins.

6. Les fibres de cellulose selon les revendications 4 ou 5, dans lesquelles, lorsqu'une feuille est formée dans les conditions (a), la valeur YI de la feuille est de 1,5 ou moins.

7. Une composition contenant des fibres de cellulose comprenant les fibres de cellulose selon l'une quelconque des

revendications 4 à 6.

**8.** La composition contenant des fibres de cellulose selon la revendication 7, comprenant un solvant.

**9.** Composition contenant des fibres de cellulose selon la revendication 8, dans laquelle le solvant est l'eau, et lorsque la concentration en solide est fixée à 0,2 % en masse, la transmittance lumineuse totale est de 80 % ou plus, la transmittance lumineuse totale de la composition liquide étant une valeur mesurée conformément à la norme JIS K 7361.

**10.** Composition contenant des fibres de cellulose selon la revendication 7, dans laquelle le degré de polymérisation des fibres de cellulose avant fibrillation est de 500 ou plus, calculé à partir de la viscosité d'une pâte mesurée conformément à la norme Tappi T230.

**11.** Corps moulé formé à partir de fibres de cellulose selon l'une quelconque des revendications 4 à 6 ou composition contenant des fibres de cellulose selon l'une quelconque des revendications 7 à 10.

**12.** Le corps moulé selon la revendication 11, qui est une feuille.

[Figure 1]

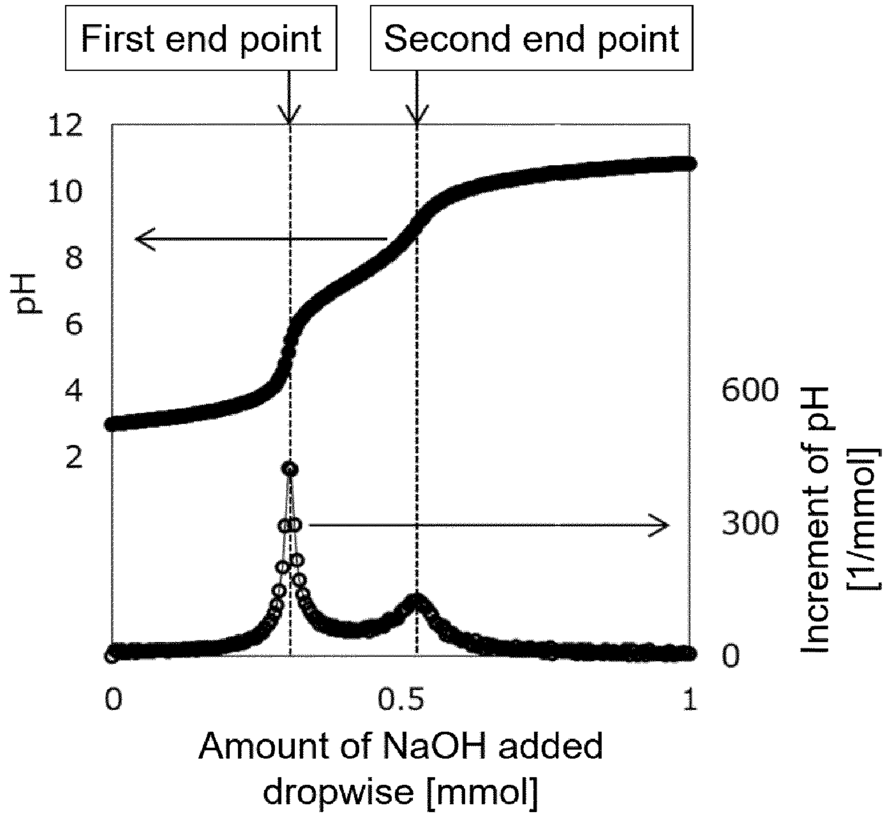
First end point
Second end point
12
10
8
6
4
2
pH
600
300
0
Increment of pH
[1/mmol]
0
0.5
1
Amount of NaOH added
dropwise [mmol]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018199891 A
- WO 2017170908 A1
- JP 2013127141 A
- WO 2014185505 A
- WO 2018159473 A


### Non-patent literature cited in the description


- **INAGAKI, NORIHIRO et al.** Phosphorylation of cellulose with phosphorous acid and thermal degradation of the product. *Journal of Applied Polymer Science*, 1976, vol. 20 (10), 2829-2836
- **SEAGAL et al.** *Textile Research Journal*, 1959, vol. 29, 786